# EUROPEAN PATENT APPLICATION

(11) **EP 4 651 526 A1**
(43) Date of publication of application: **19.11.2025**
(21) Application number: 24824932.8
(22) Date of filing: 13.03.2024
(51) Int. Cl.: H04W 4/38

(54) **COMMUNICATION METHOD, ELECTRONIC DEVICE, AND MEDIUM**

(30) Priority: 21.06.2023 CN 202310750049
(71) Applicant: Huawei Technologies Co., Ltd., Shenzhen, Guangdong 518129 (CN)
(72) Inventor: CHEN, Zhikai, Shenzhen, Guangdong 518129 (CN); HUANG, Tengfei, Shenzhen, Guangdong 518129 (CN)
(74) Representative: Thun, Clemens
(86) International application number: PCT/CN2024/081444
(87) International publication number: WO 2024/260030

(57) **Abstract**

This application relates to the field of communication technologies, and discloses a communication method, an electronic device, and a medium. The communication method includes: when detecting a first trigger event, for example, a preset operation, for example, shaking of a user, a network access device may send corresponding sensor data association information to a second electronic device; and when determining that the sensor data association information meets a first preset condition, for example, determining that the sensor data meets data corresponding to the shaking operation, the network access device may switch from a first channel to a second channel. Based on the foregoing solution, a channel switching procedure can be effectively simplified, and user experience can be improved.

## Description

This application claims priority to Chinese Patent Application No. 202310750049.8, filed with the China National Intellectual Property Administration on June 21, 2023 and entitled "COMMUNICATION METHOD, ELECTRONIC DEVICE, AND MEDIUM", which is incorporated herein by reference in its entirety.

### TECHNICAL FIELD

This application relates to the field of communication technologies, and in particular, to a communication method, an electronic device, and a medium.

### BACKGROUND

Currently, a wireless router product has become an indispensable electronic device in an indoor environment, and is configured to provide a wireless communication (wireless fidelity, Wi-Fi) signal connection for various terminal devices (including a mobile phone, a tablet, a computer, and the like). When a wireless router is used to provide a Wi-Fi signal for a terminal device, some common scenarios may deteriorate Wi-Fi signal performance, for example, interference (for example, interference from a long term evolution (long term evolution, LTE) signal) to the signal, an increase in a quantity of access devices, and channel preemption between routing devices (for example, a plurality of routing devices in nearby areas are connected to a same channel). Such deterioration leads to a lower network speed of the terminal device, resulting in video freezing, slow data sending, or the like in use of the terminal device, and affecting user experience.

Currently, in some solutions, a user may enter a setting interface of the wireless router by starting a related application (application, App), opening a related web page, or the like, to select a channel that is less occupied and less interfered, that is, the user can improve the Wi-Fi signal by manually changing a Wi-Fi channel in a wireless router setting. However, an operation of manually switching a channel of the wireless router is complex and requires knowledge of channels, resulting in poor user experience.

### SUMMARY

To resolve the foregoing problem, this application provides a communication method, an electronic device, and a medium.

According to a first aspect, this application provides a communication method. The method includes: A first electronic device communicates with a second electronic device over a first channel, where the second electronic device is a network access device; the first electronic device detects a first trigger event and sends sensor data association information to the second electronic device; and in response to the second electronic device determining that the sensor data association information meets a first preset condition, the second electronic device switches from the first channel for communicating with the first electronic device to a second channel.

In this application, the first trigger event may be a preset operation, for example, a shaking operation or the like. The sensor data association information may be information, for example, raw real-time sensor data corresponding to the preset operation, and an analysis result of sensor data (for example, whether some of acceleration values of three axes of an accelerometer are greater than a corresponding threshold). The first preset condition may be that raw sensor data meets raw data corresponding to a shaking operation or an analysis result obtained based on raw sensor data meets a result corresponding to a shaking operation. The first electronic device may be any electronic device, for example, a mobile phone, a tablet, a computer, a virtual reality (virtual reality, VR) device, a wearable device, or an augmented reality (augmented reality, AR) device. The second electronic device may be a routing device.

It may be understood that, in this application, if the sensor data association information does not meet the first preset condition, a channel switching instruction is not executed, and a current channel connection between the first electronic device and the second electronic device is maintained.

Based on the foregoing solution, a user may perform the preset operation, for example, a shaking operation, on the first electronic device, to automatically switch from a current channel of the second electronic device to another channel. In this way, a channel switching process can be effectively simplified, and user experience can be improved.

In a possible implementation, the method includes: when detecting the first trigger event and determining that running scenario information of the first electronic device meets a second preset condition, the first electronic device sends the sensor data association information to the second electronic device.

In this application, the running scenario information may be a task that is being run by the first electronic device. The task is a task included in an application of the first electronic device, and the application may be a system application (for example, a setting application) or a third-party application (for example, WeChat^{™}). The second preset condition may be that a corresponding operation for implementing the task does not include the preset operation.

In this embodiment of this application, a user intention can be accurately identified with reference to the running scenario information of the first electronic device, thereby avoiding misjudgment.

In this application, the first electronic device may determine, based on current running scenario information, whether to send the sensor data association information to the routing device. For example, when the first trigger event is a shaking operation, and it is determined, based on the current running scenario information, that a red envelope grabbing function of a run application A exists in a current running scenario and an implementation operation of the function is a shaking operation, that is, it is determined that an intention of an operation performed by the user is not to switch a channel, the first electronic device does not send the sensor data association information to the routing device, thereby avoiding misjudgment of a user intention.

In a possible implementation, the method further includes: The first electronic device detects the first trigger event and sends the sensor data association information and running scenario information corresponding to the first electronic device to the second electronic device; and in response to the second electronic device determining that the sensor data association information meets the first preset condition and the running scenario information meets a second preset condition, the second electronic device may switch from the first channel for communicating with the first electronic device to the second channel.

In some embodiments, when sending sensor data association information, a terminal device may further send current running scenario information to the routing device, and the routing device determines, based on the sensor data association information and the current running scenario information that are sent by the terminal device, whether to perform a channel switching operation. For example, a plurality of types of existing scenario information in which a switching operation exists but channel switching is not performed may be preset in the routing device. For example, pre-stored scenario information corresponding to a case in which a shaking operation exists but channel switching is not performed includes scenario information of a red envelope grabbing function, scenario information of a friend adding function, or the like. When the routing device determines that the sensor data association information sent by the terminal device is sensor data association information corresponding to a shaking operation, and the running scenario information includes scenario information in which channel switching is not performed (for example, includes the foregoing mentioned scenario of a red envelope grabbing function), the routing device does not perform a channel switching function. In this way, a user intention can be accurately identified.

In addition, because the routing device is always in a power-on state, power consumption has little impact on the routing device. Therefore, determining the running scenario information by the routing device can reduce power consumption of the first electronic device, for example, the mobile phone.

In a possible implementation, the first trigger event is the preset operation, and the sensor data association information includes sensor data association information corresponding to the preset operation.

It may be understood that, in this application, there are a plurality of preset operations, including but not limited to one or more of operations such as shaking the first electronic device, the first electronic device approaching or being in contact with the second electronic device, and preset-gesture screen touching.

In a possible implementation, the running scenario information includes information about an application that is running on the first electronic device.

In this application, the running scenario information may be a task that is being run by the first electronic device. The task is a task included in the application of the first electronic device, and the application may be a system application (for example, a setting application) or a third-party application (for example, WeChat^{™}). The second preset condition may be that a corresponding operation for implementing the task does not include the preset operation.

In a possible implementation, the method further includes: The first electronic device detects the first trigger event and sends network status information to the second electronic device; and in response to the second electronic device determining that the sensor data association information meets the first preset condition and the network status information meets a third preset condition, the second electronic device may switch from the first channel for communicating with the first electronic device to the second channel.

It may be understood that, in this application, the first electronic device may send the sensor data association information and a current network status to the second electronic device, and the second electronic device performs channel switching only when determining that the sensor data association information meets the first preset condition and the current network status is poor. In this way, misjudgment of a user intention can be avoided, and a resource waste caused by channel switching performed by the second electronic device can be reduced.

In this application, the third preset condition includes that a network rate meets a preset condition, for example, is less than a preset rate threshold.

In a possible implementation, the method further includes: when detecting the first trigger event and determining that network status information of the first electronic device meets a third preset condition, the first electronic device sends the sensor data association information to the second electronic device.

It may be understood that, in this application, the first electronic device sends the sensor data association information to the second electronic device only when the first electronic device detects the preset operation and determines that a current network status is poor. In this way, false triggering of channel switching can be avoided, and resource consumption caused by data processing performed by the second electronic device can be reduced.

In a possible implementation, the method further includes: when detecting the first trigger event and determining that running scenario information of the first electronic device meets a second preset condition and network status information of the first electronic device meets a third preset condition, the first electronic device may send the sensor data association information to the second electronic device.

In this application, when detecting the preset operation, the first electronic device determines, based on both current running scenario information and the network status information, whether to send the sensor data association information to the second electronic device. In this way, false triggering of channel switching can be avoided, and resource consumption caused by sending data by the first electronic device a plurality of times can be reduced.

In a possible implementation, the method further includes: The first electronic device detects the first trigger event and sends the sensor data association information, network status information, and running scenario information to the second electronic device; and in response to the second electronic device determining that the sensor data association information meets the first preset condition, the running scenario information corresponding to the first electronic device meets a second preset condition, and the network status information meets a third preset condition, the second electronic device switches from the first channel for communicating with the first electronic device to the second channel.

It may be understood that, in this application, the first electronic device may send the sensor data association information, and current running scenario information and the network status information of the first electronic device to the second electronic device, and the second electronic device determines whether the sensor data association information meets the first preset condition, whether the running scenario information corresponding to the first electronic device meets the second preset condition, and whether the network status information meets the third preset condition, thereby reducing resource consumption of the first electronic device. In addition, misjudgment of a user intention can be avoided, and a resource waste caused by channel switching performed by the second electronic device can be reduced.

In a possible implementation, the network status information includes a network rate.

In a possible implementation, that the first electronic device detects the first trigger event and sends the sensor data association information to the second electronic device includes: when approaching or being in contact with the second electronic device, the first electronic device sends the sensor data association information to the second electronic device.

In a possible implementation, that the first electronic device approaches or is in contact with the second electronic device includes: The first electronic device establishes a near field communication connection to the second electronic device.

It may be understood that, that the first electronic device approaches the second electronic device may mean that a distance between the first electronic device and the second electronic device is within a preset distance.

It may be understood that in this application, when the first electronic device approaches or is in contact with the second electronic device, the two devices may establish a near field communication connection, and the first electronic device may send specific absorption rate sensor data association information to the second electronic device. The specific absorption rate sensor data association information includes a specific absorption rate. When the second electronic device detects that the specific absorption rate meets a preset condition, for example, is greater than or equal to a preset specific absorption rate threshold, the second electronic device may perform channel switching.

In a possible implementation, the first trigger event includes an operation of shaking the first electronic device, and the sensor data association information includes at least one of accelerometer data association information, gyroscope sensor data association information, and specific absorption rate sensor data association information.

It may be understood that in this application, when the preset operation is shaking the first electronic device by the user, corresponding sensor data association information includes but is not limited to one or more of accelerometer data association information, gyroscope sensor data association information, and specific absorption rate sensor data association information. The accelerometer data association information may include an acceleration value, the gyroscope sensor data association information may include an angular velocity value, and the specific absorption rate sensor data association information may include a specific absorption rate. When one or more of acceleration values of three axes, one or more of angular velocity values of three axes, or the specific absorption rate meets a preset condition, for example, the acceleration values of the three axes are equal to a first threshold and the angular velocity values of the three axes are equal to a second threshold, or at least some of the acceleration values and at least some of the angular velocity values exceed corresponding thresholds, and the specific absorption rate is greater than or equal to a third threshold, the second electronic device performs channel switching.

In a possible implementation, the first trigger event includes a preset-gesture screen-touching operation, and the sensor data association information includes pressure sensor data association information.

It may be understood that, in this application, when the preset operation is a gesture screen-touching operation, corresponding pressure sensor data association information includes a pressure value. When the pressure value is greater than or equal to a preset pressure sensor threshold, the second electronic device performs channel switching.

In a possible implementation, before the second electronic device switches from the first channel for communicating with the first electronic device to the second channel, the method further includes: The first electronic device sends query information to the user; and in response to a confirmation instruction of the user, the second electronic device switches from the first channel for communicating with the first electronic device to the second channel.

In a possible implementation, that the first electronic device sends the query information to the user includes: The first electronic device displays the query information and/or the first electronic device sends a voice instruction corresponding to the query information.

It may be understood that, in this application, the first electronic device may query a user intention in a plurality of manners (for example, by using a query pop-up window or a voice instruction), and the user may also make a reply in a plurality of manners (for example, by touching and controlling the mobile phone or by using a voice response).

According to a second aspect, this application provides a communication method, applied to a second electronic device. The method includes: The second electronic device communicates with a first electronic device over a first channel, where the second electronic device is a network access device; the second electronic device receives sensor data association information sent by the first electronic device; and the second electronic device determines that the sensor data association information meets a first preset condition, and the second electronic device switches from the first channel for communicating with the first electronic device to a second channel.

In this application, the sensor data association information may be information, for example, raw sensor data and an analysis result of sensor data (for example, whether some of acceleration values of three axes of an accelerometer are greater than a corresponding threshold). The first preset condition may be that the raw sensor data meets raw data corresponding to a shaking operation, an analysis result obtained based on the raw sensor data meets a result corresponding to a shaking operation, or the like.

It may be understood that, in this application, the second electronic device determines the received sensor data association information based on the first preset condition. If the sensor data information meets the first preset condition, the second electronic device executes a channel switching instruction and switches from the first channel to the second channel, and the second electronic device communicates with the first electronic device over the second channel. If the sensor data association information does not meet the first preset condition, the second electronic device does not execute a channel switching instruction, and maintains a current channel connection between the second electronic device and the first electronic device.

Based on the foregoing solution, a user may perform a preset operation, for example, a shaking operation, on the first electronic device, to automatically switch from a current channel of the second electronic device to another channel. In this way, a channel switching process can be effectively simplified, and user experience can be improved.

In a possible implementation, the method further includes: The second electronic device receives the sensor data association information and running scenario information corresponding to the first electronic device that are sent by the first electronic device; and the second electronic device determines that the sensor data association information meets the first preset condition and the running scenario information meets a second preset condition, and the second electronic device switches from the first channel for communicating with the first electronic device to the second channel.

In this application, the running scenario information includes a task that is being run by the first electronic device. The task is a task included in an application of the first electronic device, and the application may be a system application or a third-party application. The second preset condition includes that a corresponding operation for implementing the task does not include the preset operation.

It may be understood that, in this application, a plurality of types of existing scenario information in which a switching operation exists but channel switching is not performed may be preset in the second electronic device, and the second electronic device may determine, based on the received sensor data association information and current running scenario information, whether to perform a channel switching operation. The second electronic device switches from the first channel to the second channel only when the sensor data information meets the first preset condition and the current running scenario information is different from the preset scenario information in which channel switching is not performed. In this way, a user intention can be accurately identified, and misjudgment can be avoided.

In a possible implementation, the running scenario information includes information about an application that is running on the first electronic device.

In a possible implementation, the method further includes: The second electronic device receives the sensor data association information and network status information that are sent by the first electronic device; and the second electronic device determines that the sensor data association information meets the first preset condition and the network status information meets a third preset condition, and the second electronic device switches from the first channel for communicating with the first electronic device to the second channel.

In this application, the third preset condition includes that a network rate meets a preset condition, for example, is less than a preset rate threshold.

It may be understood that, in this application, the second electronic device may determine, based on the received sensor data association information and the network status information, whether to perform channel switching. The second electronic device performs channel switching only when determining that the sensor data association information meets the first preset condition and a current network status is poor. In this way, misjudgment of a user intention can be avoided, and a resource waste caused by channel switching performed by the second electronic device can be reduced.

In a possible implementation, the method further includes: The second electronic device receives the sensor data association information, and running scenario information and network status information that correspond to the first electronic device that are sent by the first electronic device; and the second electronic device determines that the sensor data association information meets the first preset condition, the running scenario information meets a second preset condition, and the network status information meets a third preset condition, and the second electronic device switches from the first channel for communicating with the first electronic device to the second channel.

In a possible implementation, the network status information includes a network rate.

In a possible implementation, before the second electronic device switches from the first channel for communicating with the first electronic device to the second channel, the method further includes: The second electronic device sends a query instruction to the first electronic device; and in response to a confirmation instruction executed by the user on the first electronic device, the second electronic device switches from the first channel for communicating with the first electronic device to the second channel.

It may be understood that, in this application, after determining that the sensor data association information meets the first preset condition, the second electronic device may further send, to the first electronic device, the query instruction instructing whether to confirm channel switching, and the second electronic device determines, in response to the confirmation instruction executed by the user on the first electronic device, whether to switch a channel. In this way, misjudgment of a user intention can be avoided.

According to a third aspect, this application provides an electronic device. The electronic device is a first electronic device. The first electronic device communicates with a second electronic device over a first channel, where the second electronic device is a network access device; and when detecting a first trigger event, the first electronic device sends sensor data association information to the second electronic device, so that when determining that the sensor data association information meets a first preset condition, the second electronic device switches from the first channel for communicating with the first electronic device to a second channel.

In a possible implementation, when detecting the first trigger event and determining that running scenario information of the first electronic device meets a second preset condition, the first electronic device sends the sensor data association information to the second electronic device. The running scenario information includes information about an application that is running on the first electronic device.

In a possible implementation, when detecting the first trigger event, the first electronic device sends the sensor data association information and running scenario information corresponding to the first electronic device to the second electronic device.

In a possible implementation, when detecting the first trigger event and determining that network status information of the first electronic device meets a third preset condition, the first electronic device sends the sensor data association information to the second electronic device. The network status information includes a network rate.

In a possible implementation, when detecting the first trigger event and determining that running scenario information of the first electronic device meets a second preset condition and network status information of the first electronic device meets a third preset condition, the first electronic device may send the sensor data association information to the second electronic device.

In a possible implementation, when detecting the first trigger event, the first electronic device sends the sensor data association information, network status information, and running scenario information to the second electronic device.

In a possible implementation, when receiving a query instruction of the second electronic device, the first electronic device sends query information to a user; and in response to a confirmation instruction executed by the user on the first electronic device, the first electronic device sends information related to the confirmation instruction to the second electronic device, so that the second electronic device switches from the first channel for communicating with the first electronic device to the second channel.

According to a fourth aspect, this application provides an electronic device, including a memory and a processor. The memory is configured to store instructions executed by one or more processors of the electronic device. The processor is one of the one or more processors of the electronic device, and is configured to perform the communication method mentioned in this application.

According to a fifth aspect, this application provides a readable medium. The readable medium stores instructions. When the instructions are executed on an electronic device, the electronic device is enabled to perform the communication method mentioned in this application.

### BRIEF DESCRIPTION OF DRAWINGS

FIG. 1 is a diagram of a scenario in which a plurality of types of electronic devices are connected to a wireless router Wi-Fi according to some embodiments of this application;
FIG. 2 is a diagram of a scenario of signal interference between a plurality of wireless routers according to some embodiments of this application;
FIG. 3 is a diagram of a page of manually switching a Wi-Fi channel according to some embodiments of this application;
FIG. 4A is a diagram of a wireless signal enhancement method according to some embodiments of this application;
FIG. 4B is a diagram of an interface of a wireless signal enhancement method according to some embodiments of this application;
FIG. 5A is a diagram of a wireless signal enhancement method according to some embodiments of this application;
FIG. 5B is a diagram of an interface of a wireless signal enhancement method according to some embodiments of this application;
FIG. 6 is a diagram of a hardware structure of an electronic device according to some embodiments of this application;
FIG. 7A and FIG. 7B are a specific schematic flowchart of performing channel switching according to some embodiments of this application;
FIG. 8A and FIG. 8B are a specific schematic flowchart of performing channel switching according to some embodiments of this application;
FIG. 9A and FIG. 9B are a specific schematic flowchart of performing channel switching according to some embodiments of this application;
FIG. 10A and FIG. 10B are a specific schematic flowchart of performing channel switching according to some embodiments of this application;
FIG. 11 is a schematic flowchart of interaction between devices in performing channel switching according to some embodiments of this application; and
FIG. 12 is a schematic flowchart of interaction between devices in performing channel switching according to some embodiments of this application.

### DESCRIPTION OF EMBODIMENTS

Illustrative embodiments of this application include but are not limited to a communication method, an electronic device, and a medium.

To understand the solutions of this application more clearly, terms in related fields in this application are first explained and described.

Frequency band: The frequency band is a frequency range of an electromagnetic wave in the communication field. Wi-Fi is used as an example. Currently, commonly used frequency bands for Wi-Fi include frequency bands such as 2.4G, 5G, and 6G.

Channel: The channel is a path for transmission of a signal in a communication system, and includes a transmission medium through which the signal is transmitted from a transmit end to a receive end. Wi-Fi is still used as an example. Each of commonly used frequency bands for Wi-Fi is divided into a plurality of channels. For example, according to an IEEE 802.11 protocol, a 2.4 GHz Wi-Fi frequency band is divided into 13 overlapping channels, and a width of each channel is 22 MHz. A 5 GHz Wi-Fi frequency band is divided into 201 channels.

The following briefly describes a principle of communication performed by a terminal device by using a wireless router.

It may be understood that the wireless router may also be referred to as a wireless access point (access point, AP), and each terminal device (for example, a mobile phone or a notebook computer) connected to the wireless access point is a station (station, STA). In a network supported by a Wi-Fi protocol, each wireless AP provides a service set identifier (service set identifier, SSID), namely, a Wi-Fi name, to identify a corresponding Wi-Fi signal provided by a wireless router. When the wireless router is started, related parameter configuration, for example, a channel for communicating with a terminal device may be set.

First, a STA scans, on each available channel, a wireless network signal transmitted by an AP. If the AP is found, the STA and the AP are connected through a wireless link. In this process, identity authentication needs to be performed by using an authentication mechanism, for example, a key. After the wireless link connection succeeds, the STA associates with the AP. In this way, the terminal device successfully accesses a wireless network by using a channel for communication, for example, accessing an Internet. In wireless communication, data needs to be received and sent by using a wireless router. This process needs to be implemented by using a "data packet" technology. A data packet is a basic unit for data transmission. The wireless router transmits these data packets from one device to another device. For example, if a user A needs to send data to a mobile phone B1 of a user B by using a mobile phone A1, the mobile phone A1 may send a data packet to a wireless router C connected to the mobile phone A1; then the wireless router C sends the data packet to a wireless router D connected to the mobile phone B1; and after that, the wireless router D sends, by using a channel, the data packet to the mobile phone B1 connected to the wireless router D. In this process, a STA and an AP that are associated with each other are always on a same channel.

When the AP switches the channel, if the STA supports channel change, the AP sends a signal frame to the STA, to constrain the STA to switch the channel later or immediately. In this way, the STA can synchronously switch the channel and does not go offline. If the STA does not support channel change, the STA does not process a signal frame sent by the AP. After the AP switches the channel, the STA goes offline.

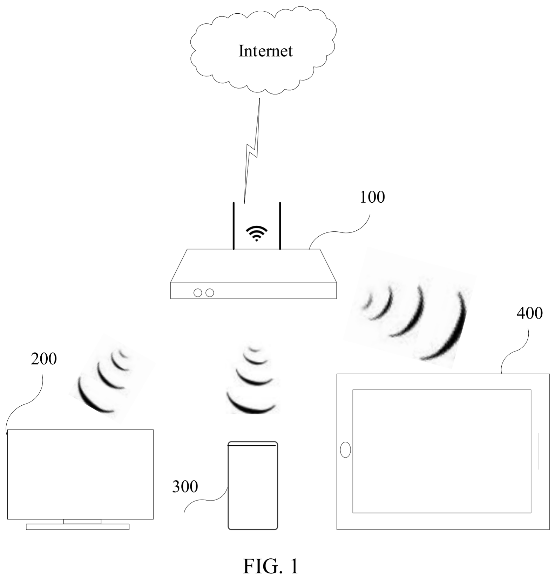

It may be understood that the wireless router may provide a wireless signal connection, for example, a Wi-Fi signal connection, for various terminal devices. For example, as shown in FIG. 1, electronic devices such as a personal computer (personal computer, PC) 200, a mobile phone 300, and a tablet 400 may all establish a connection to a wireless router 100, to access a wireless network.

However, when the wireless router is used to provide a wireless signal for the terminal device, some common scenarios may deteriorate Wi-Fi signal performance, for example, interference to the signal, an increase in a quantity of access devices, and channel preemption between routing devices.

For example, when an operating frequency band of the wireless router overlaps or is close to an operating frequency band of an LTE signal, the wireless router may be interfered by the LTE signal. It may be understood that the LTE signal may be a data signal running in a 4G mode. Specifically, Table 1 shows operating frequency bands of signals B40, B7, B38, and B41 in the LTE signal.

**Table 1:**

| Signal | Operating frequency band |
|---|---|
| B40 | 2300 M to 2400 M |
| B7 | 2500 M to 2570 M |
| B38 | 2570 M to 2620 M |
| B41 | 2496 M to 2690 M |

In some cases, the routing device works on a channel 1 in a 2.4 GHz frequency band, and a frequency band range is 2401 M to 2423 M. However, the operating frequency band of the LTE signal B40 shown in Table 1 is 2300 M to 2400 M, that is, the frequency band of the B40 is close to a Wi-Fi frequency band of the channel 1. When some nearby users are connected to a data network B40, that is, when the data network B40 and a Wi-Fi signal are both enabled, a transmit spurious signal of each of the data network B40 and the Wi-Fi signal falls within an operating frequency band of the other party, causing interference between signals. Similarly, if the routing device works on a channel 36 in a 5 GHz frequency band, and a frequency band range is 5170 M to 5190 M. However, the operating frequency band of the LTE signal B38 shown in Table 1 is 2570 M to 2620 M. If a nearby user enables a data network B38, a Wi-Fi frequency band of the channel 1 falls in frequency multiplication of the B38, causing interference between signals.

For another example, a quantity of access devices of the routing device increases. A quantity of terminals that can be carried on a communication channel of each AP is limited. A half-duplex transmission mode is used in the wireless network. When a user performs data transmission, a wireless channel is occupied, and another user cannot perform data transmission. If too many terminals access a same routing device, signal congestion occurs on a same channel. As a result, a signal is unstable and an Internet access rate of the user becomes lower.

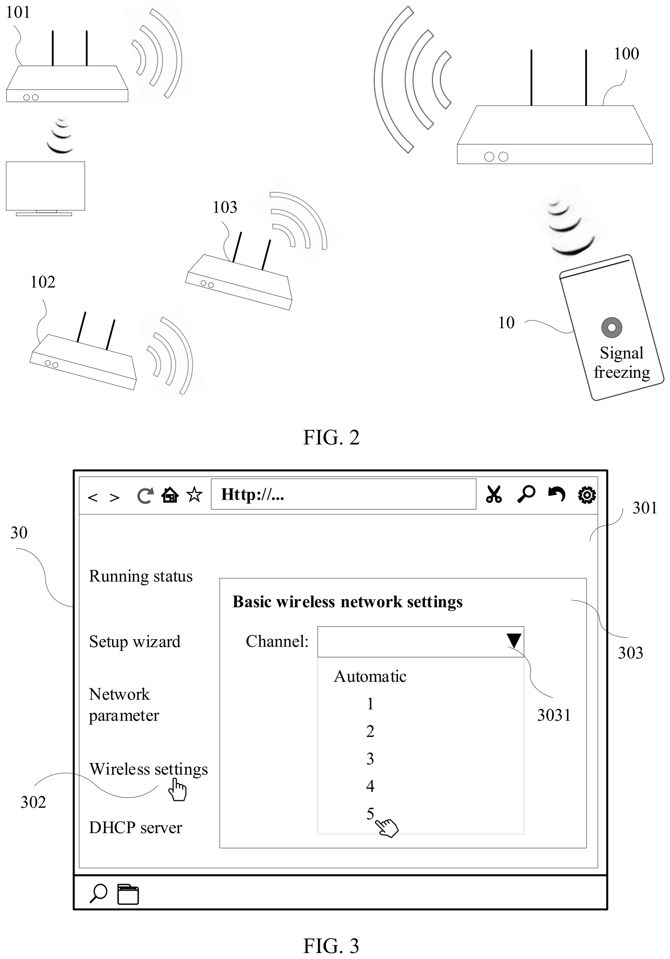

For another example, routing channel preemption may occur on routing devices upstairs and downstairs. As shown in FIG. 2, there are a plurality of wireless routers in nearby areas, for example, a plurality of wireless routers such as a wireless router 100, a wireless router 101, a wireless router 102, and a wireless router 103 all use a channel 1. As a result, too many devices use the channel 1 to perform data transmission, causing channel congestion. Consequently, an Internet access rate of each electronic device becomes lower.

To improve wireless signal performance, in some manners, the user improves wireless signal performance by manually changing a channel corresponding to the wireless router. For example, when the channel 1 is excessively congested, the channel 1 may be changed to another channel. For example, as shown in FIG. 3, the user logs in to a website by using a computer 30 to enter a related wireless router setting page 301. In addition, the user may open a wireless setting page 303 by tapping a wireless setting control 302 on the wireless router setting page 301, and select a required channel on the wireless setting page 303 by using a channel setting control 3031. For example, a channel 5 may be selected as a channel used by the wireless router to perform data transmission.

However, an operation of manually switching a channel of the wireless router is complex and requires knowledge of channels, resulting in poor user experience.

To resolve the foregoing problem, embodiments of this application provide a communication method. A user may perform a preset operation on a terminal device. For example, the terminal device is a mobile phone. The user may perform an operation of shaking the mobile phone, so that the terminal device obtains corresponding sensor data association information and sends the sensor data association information to a routing device. The routing device may determine, by determining whether the sensor data association information meets a preset condition, whether the user has a channel switching intention. For example, the routing device may determine, by determining that the sensor data meets data corresponding to a preset shaking operation, that is, when the preset condition is met, that the user has a channel switching intention and a channel needs to be switched. In this case, the routing device automatically switches from the current channel to another channel.

In addition, in some embodiments, the terminal device may alternatively send both sensor data association information and a network status (for example, a current network speed) to a routing device. The routing device may determine whether the sensor data association information meets a preset condition and whether the network status of the terminal device is poor, to determine whether the user has a channel switching intention. For example, the routing device may determine whether the sensor data meets data and the like that correspond to a preset shaking operation. When the preset condition is met and it is determined that a network of the terminal device is poor, the routing device determines that the user has a channel switching intention and a channel needs to be switched. In this case, the routing device automatically switches from the current channel to another channel. In this way, a channel switching procedure is effectively simplified, and user experience is improved.

In some embodiments, the routing device may obtain, from the terminal device in real time, sensor data association information corresponding to different preset operations. For example, when a preset channel switching operation is a shaking operation, the routing device may obtain, in real time, sensor data association information of an accelerometer (accelerometer, A), angular velocity data association information of a gyroscope (gyroscope, G) sensor, and specific absorption rate (specific absorption rate, SAR) sensor data association information of the terminal device. The A+G sensor data association information is used to determine whether the shaking operation exists, and the SAR sensor data association information is used to determine whether the user holds the terminal device.

In some embodiments, after the routing device detects that a near field communication (Near Field Communication, NFC) technology of the terminal device establishes a communication connection with an NFC of the routing device, for example, after the user holds the terminal device and touches the routing device to the terminal device, and the NFC of the terminal device establishes a communication connection with the NFC of the routing device, the routing device may alternatively obtain sensor data association information of the terminal device to determine a channel switching intention of the user, for example, may obtain SAR sensor data association information to determine whether the user holds the terminal device, and when determining that the user holds the terminal device and a network status of the terminal device is poor, the routing device determines that the user has a channel switching intention.

In some embodiments, when detecting sensor data association information corresponding to the preset operation, the terminal device may alternatively send the sensor data association information to the routing device. In this way, resource consumption caused by a need of the routing device to obtain the sensor data association information in real time can be reduced. Alternatively, when detecting sensor data association information corresponding to the preset operation and determining that a current network status is poor, the terminal device may send the sensor data association information to the routing device.

In some embodiments, to avoid misjudgment of an operation intention of the user, for example, an intention of a shaking operation performed by the user is not to switch a channel, but to implement a specific function in an application, for example, a red envelope grabbing function, and the user is not intended to switch the channel, but the routing device considers that the user has a channel switching intention. Consequently, an unnecessary channel switching operation is performed.

To resolve the foregoing problem, the terminal device may determine, based on current running scenario information, whether to send the sensor data association information to the routing device. For example, when determining, based on the current running scenario information, that a red envelope grabbing function of a run application A exists in a current running scenario and an implementation operation of the function is a shaking operation, that is, determining that an intention of the operation performed by the user is not to switch a channel, the terminal device does not send the sensor data association information to the routing device, thereby avoiding misjudgment of a user intention.

In some embodiments, when detecting sensor data association information corresponding to the preset operation, the terminal device may alternatively determine, based on both current running scenario information and a current network status (for example, a current network rate is less than a preset rate threshold), whether to send the sensor data association information to the routing device.

In some embodiments, when sending sensor data association information, the terminal device may further send current running scenario information to the routing device, and the routing device determines, based on the sensor data association information and the current running scenario information that are sent by the terminal device, whether to perform a channel switching operation. For example, a plurality of types of existing scenario information in which a switching operation exists but channel switching is not performed may be preset in the routing device. For example, pre-stored scenario information corresponding to a case in which a shaking operation exists but channel switching is not performed includes scenario information of a red envelope grabbing function, scenario information of a friend adding function, or the like. When determining that the sensor data association information sent by the terminal device is sensor data association information corresponding to a shaking operation and the running scenario information includes the preset red envelope grabbing scenario information, the routing device does not perform a channel switching function. In this way, a user intention can be accurately identified.

In some embodiments, when sending sensor data association information, the terminal device may further send current running scenario information and a current network status to the routing device, and the routing device determines, based on the sensor data association information, the current running scenario information, and the current network status that are sent by the terminal device, whether to perform a channel switching operation. For example, a plurality of types of existing scenario information in which a switching operation exists but channel switching is not performed may be preset in the routing device. Only when the routing device determines that the sensor data association information sent by the terminal device is sensor data association information corresponding to the preset operation, the running scenario information does not include the preset scenario information, and the current network status is poor, the routing device performs a channel switching function. In this way, a user intention can be accurately identified.

In some embodiments, the user may alternatively implement channel switching by using any other preset operation, for example, performing a preset-gesture operation on a screen. In this case, the terminal device may send corresponding pressure sensor data association information to the routing device, so that the routing device determines, based on the pressure sensor data association information, whether to switch a channel. However, it may be understood that, compared with the foregoing shaking operation or touch operation, a screen-touching operation, for example, the preset gesture, increases a probability that the screen is accidentally touched. For example, when the user watches a video, a video pause occurs due to signal freezing, and the user implements channel switching by using a preset "V"-shaped gesture operation. However, the "V"-shaped gesture usually causes another misoperation of the mobile phone, for example, adjusting a volume or adjusting screen brightness of the mobile phone. For another example, when the user controls the mobile phone by using a preset "L"-shaped gesture, a video progress bar may be pulled, causing poor user experience. In addition, the terminal device has scenario information of a plurality of screen-touching operations. When the user operates the terminal device by using the screen-touching operation, the terminal device may incorrectly determine a user intention, and a probability of falsely triggering channel switching is high. To overcome the foregoing disadvantage, channel switching may be implemented in combination with another means, for example, pop-up window information is used to ask the user to determine whether to perform channel switching.

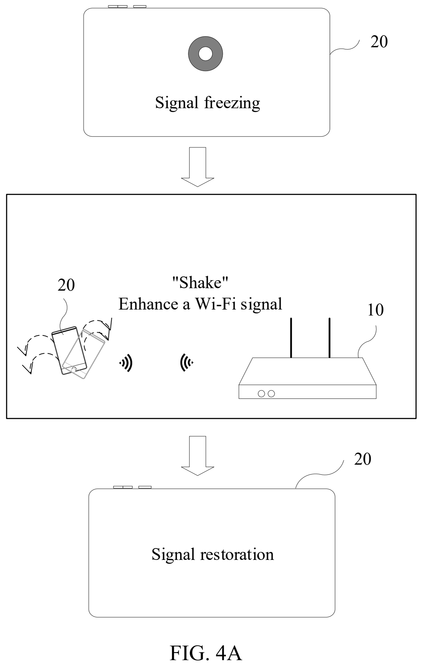

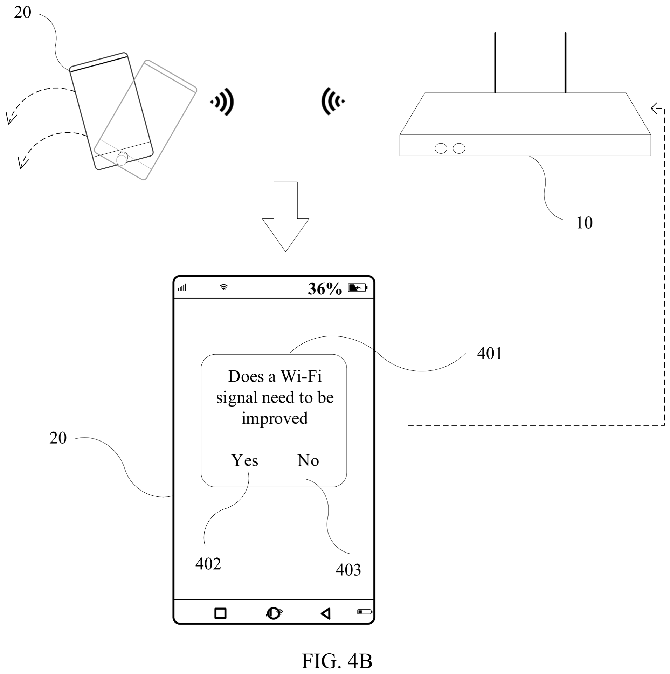

With reference to FIG. 4A and FIG. 4B, a scenario in which the user performs Wi-Fi channel switching based on a shaking operation is described below by using an example in which the routing device is a wireless router 10 and the terminal device is a mobile phone 20.

For example, as shown in FIG. 4A, when playing a video by using the mobile phone 20, the user perceives video freezing, and then holds the mobile phone 20 to perform a shaking operation, and expects to enhance a Wi-Fi signal. In this case, the mobile phone 20 sends a current network status (for example, a current network speed), A+G sensor data association information, and SAR sensor data association information to the wireless router 10, and the wireless router 10 may determine the current network status. In addition, the wireless router 10 determines, based on preset thresholds that correspond to A+G sensor data association information and that indicate whether to switch a channel, whether the received A+G sensor data association information meets a preset condition, for example, if the received A+G sensor data association information exceeds the thresholds, it indicates that a shaking operation exists. In addition, the wireless router 10 may determine the SAR sensor data association information. If the received SAR sensor data association information exceeds a preset threshold, it is proved that the user is in a state of holding the mobile phone 20. After it is detected that the user holds the mobile phone 20, it is determined that the user has a channel switching intention.

In this case, as shown in FIG. 4B, the wireless router 10 may send, to the mobile phone 20, a query instruction instructing whether to switch a channel. The mobile phone 20 may notify the user based on the query instruction by using a pop-up window interface 401 of the mobile phone 20, so that the user chooses, in the pop-up window interface 401, whether the Wi-Fi signal needs to be optimized. If detecting that the user selects a "no" control 403, the mobile phone 20 determines that the user does not perform channel switching, and sends, to the wireless router 10, an instruction instructing not to switch a channel. If detecting that the user selects a "yes" control 402, the mobile phone 20 determines that the user needs to switch a channel, and sends a channel switching instruction to the wireless router 10. The wireless router 10 switches from a current channel 1 to a channel 2. In this case, a signal of the mobile phone 20 is restored, and the user continues to watch the video.

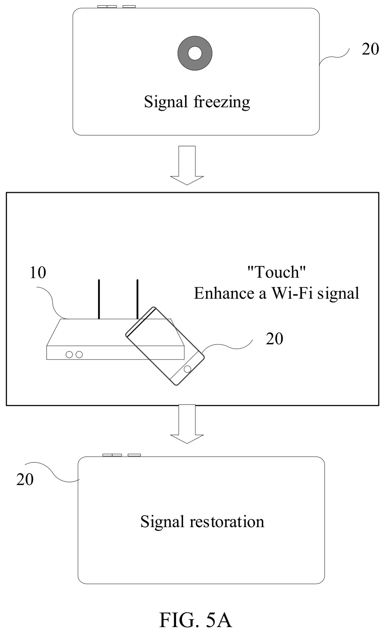

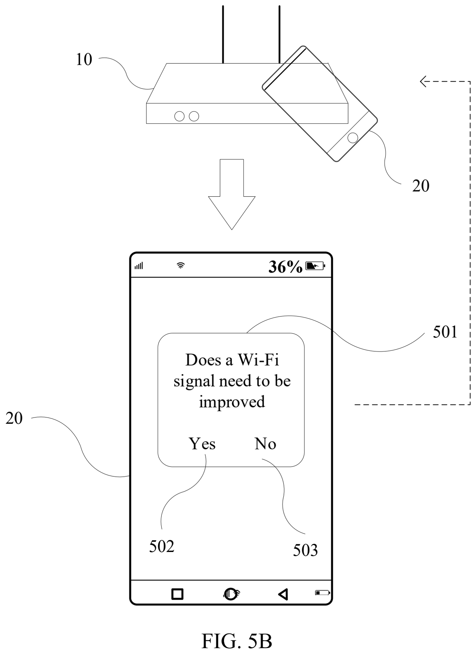

With reference to FIG. 5A and FIG. 5B, a scenario in which the user performs channel switching based on a touch operation is described below by using an example in which the routing device is a wireless router 10 and the terminal device is a mobile phone 20.

For example, as shown in FIG. 5A, when playing a video by using the mobile phone 20, the user perceives video freezing, and then holds the mobile phone 20 to perform a touch operation, and expects to enhance a Wi-Fi signal. In this case, an NFC of the wireless router 10 and an NFC of the mobile phone 20 are close to each other to be connected, and non-contact point-to-point data transmission may be performed. The mobile phone 20 may send a current network status (for example, a current network speed) and SAR sensor data association information to the wireless router 10, and the wireless router 10 determines, based on the current network status, whether channel switching is required. In addition, the wireless router 10 determines, based on a preset threshold that corresponds to SAR sensor data association information and that indicates whether to switch a channel, whether the received SAR sensor data association information meets a preset condition. If the received SAR sensor data association information exceeds the preset threshold, it is proved that the user is in a state of holding the mobile phone 20. After it is detected that the user holds the mobile phone 20, it is determined that the user has a channel switching intention.

In this case, as shown in FIG. 5B, the wireless router 10 may send, to the mobile phone 20, a query instruction instructing whether to switch a channel. The mobile phone 20 may notify the user based on the query instruction by using a pop-up window interface 501 of the mobile phone, so that the user chooses, in the pop-up window interface 501, whether the Wi-Fi signal needs to be optimized. If detecting that the user selects a "no" control 503, the mobile phone 20 determines that the user does not perform channel switching, and sends, to the wireless router 10, an instruction instructing not to switch a channel. If detecting that the user selects a "yes" control 502, the mobile phone 20 determines that the user needs to switch a channel, and sends a channel switching instruction to the wireless router 10. The wireless router 10 switches from a current channel 1 to a channel 2. In this case, a signal of the mobile phone 20 is restored, and the user continues to watch the video.

In this way, in this application, user experience can be improved in a timely manner and the Wi-Fi signal can be improved by using this simple operation.

Before the communication method provided in embodiments of this application is described in detail below, an electronic device mentioned in embodiments of this application is first described. It may be understood that a terminal electronic device in embodiments of this application may be any electronic device, for example, a mobile phone, a computer, a VR device, a tablet computer, a wearable device, an AR device, or a notebook computer. A form of the electronic device is not specifically limited in embodiments of this application.

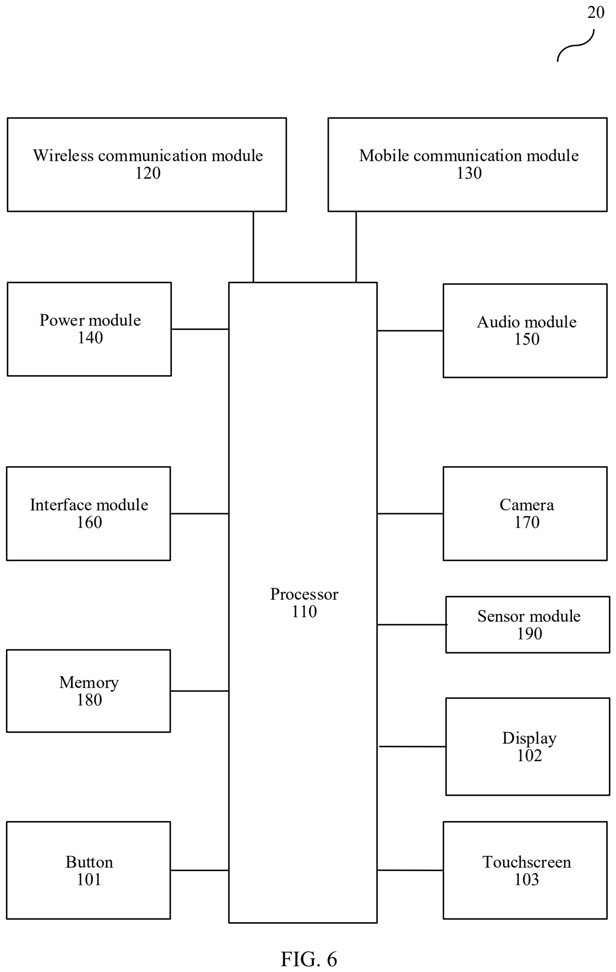

FIG. 6 is an example of a diagram of a hardware structure of a mobile phone 20 according to an embodiment of this application. As shown in FIG. 6, the mobile phone 20 may include a processor 110 (or referred to as a host), a power module 140, a memory 180, a mobile communication module 130, a wireless communication module 120, a sensor module 190, an audio module 150, a camera 170, an interface module 160, a button 101, a display 102, a touchscreen 103, and the like.

It may be understood that the schematic structure in embodiments of the present invention does not constitute a limitation on a unique implementation of the mobile phone 20. In some other embodiments of this application, the mobile phone 20 may include more or fewer components than those shown in the figure, or some components may be combined, or some components may be split, or components are arranged in different manners. The components shown in the figure may be implemented by hardware, software, or a combination of software and hardware.

The processor 110 may include one or more processing units, for example, may include a processing module or a processing circuit of a central processing unit (central processing unit, CPU), a graphics processing unit (graphics processing unit, GPU), a digital signal processor, a micro-programmed control unit (micro-programmed control unit, MCU), an artificial intelligence (artificial intelligence, AI) processor, a programmable logic device (field programmable gate array, FPGA), or the like. Different processing units may be independent components, or may be integrated into one or more processors. A storage unit may be disposed in the processor 110, and is configured to store instructions and data. In some embodiments, the storage unit in the processor 110 is a cache 180.

It may be understood that, in embodiments of this application, the processor may be configured to perform method steps performed by a terminal device in a channel switching method in this application.

The power module 140 may include a power supply, a power management component, and the like. The power supply may be a battery. The power management component is configured to manage charging of the power supply and power supply of the power supply to another module. In some embodiments, the power management component includes a charging management module and a power management module. The charging management module is configured to receive a charging input from a charger. The power management module is configured to connect to the power supply. The charging management module is connected to the processor 110. The power management module receives an input from the power supply and/or the charging management module, and supplies power to the processor 110, the display 102, the camera 170, the wireless communication module 120, and the like.

The mobile communication module 130 may include but is not limited to an antenna, a power amplifier, a filter, a low noise amplifier (Low Noise Amplifier, LNA), and the like. The mobile communication module 130 may provide a wireless communication solution that is applied to the mobile phone 20 and that includes 2G/3G/4G/5G or the like. The mobile communication module 130 may receive an electromagnetic wave through the antenna, perform processing such as filtering or amplification on the received electromagnetic wave, and transmit a processed electromagnetic wave to a modem processor for demodulation. The mobile communication module 130 may further amplify a signal modulated by the modem processor, and convert an amplified signal into an electromagnetic wave for radiation by using the antenna. In some embodiments, at least some function modules of the mobile communication module 130 may be disposed in the processor 110. In some embodiments, at least some function modules of the mobile communication module 130 and at least some modules of the processor 110 may be disposed in a same component.

The wireless communication module 120 may include an antenna, and receive and send an electromagnetic wave through the antenna. The wireless communication module 120 may provide a wireless communication solution that is applied to the mobile phone 20 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The mobile phone 20 may communicate with a network and another device by using a wireless communication technology.

In some embodiments, the mobile communication module 130 and the wireless communication module 120 that are of the mobile phone 20 may alternatively be located in a same module.

The display 102 is configured to display a man-machine interaction interface, an image, a video, and the like. The display 102 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a quantum dot light-emitting diode (quantum dot light-emitting diode, QLED), or the like.

The sensor module 190 may include an optical proximity sensor, a pressure sensor, a gyroscope sensor, a barometric pressure sensor, a magnetic sensor, an accelerometer, a distance sensor, a fingerprint sensor, a temperature sensor, a touch sensor, an ambient light sensor, a bone conduction sensor, a specific absorption rate sensor, a sound sensor, and the like.

The audio module 150 is configured to convert a digital audio signal into an analog audio signal for output, or convert an analog audio input into a digital audio signal. The audio module 150 may be further configured to encode and decode an audio signal. In some embodiments, the audio module 150 may be disposed in the processor 110, or some function modules of the audio module 150 are disposed in the processor 110. In some embodiments, the audio module 150 may include a speaker, an earpiece, a microphone, and a headset jack.

The camera 170 is configured to capture a static image or a video. An optical image of an object is generated through a lens, and is projected onto a photosensitive element. The photosensitive element converts an optical signal into an electrical signal, and then transmits the electrical signal to image signal processing (Image Signal Processing, ISP) to convert the electrical signal into a digital image signal. The mobile phone 20 may implement an image shooting function by using the ISP, the camera 170, a video codec, the graphics processing unit (Graphics Processing Unit, GPU), the display 102, an application processor, and the like.

The interface module 160 includes an external memory interface, a universal serial bus (universal serial bus, USB) port, a subscriber identity module (subscriber identity module, SIM) card interface, and the like. The external memory interface may be configured to connect to an external memory card, for example, a micro SD card, to expand a storage capability of the mobile phone 20. The external memory card communicates with the processor 110 by using the external memory interface, to implement a data storage function. The universal serial bus port is used for communication between the mobile phone 20 and another electronic device. The subscriber identity module card interface is configured to communicate with a SIM card installed on the mobile phone 20, for example, read phone number stored in the SIM card, or write phone number into the SIM card.

In some embodiments, the mobile phone 20 further includes the button 101, a motor, an indicator, and the like. The button 101 may include a volume button, a power-on/power-off button, and the like. The motor is configured to enable the mobile phone 20 to generate vibration effect, for example, generate vibration when the mobile phone 20 of a user is called, to prompt the user to answer an incoming call of the mobile phone 20. The indicator may include a laser indicator, a radio frequency indicator, a light-emitting diode (light-emitting diode, LED) indicator, and the like.

The following describes in detail the communication method in embodiments of this application based on the terminal electronic device mentioned in embodiments of this application. First, a shaking scenario is used as an example to describe the communication method in embodiments of this application.

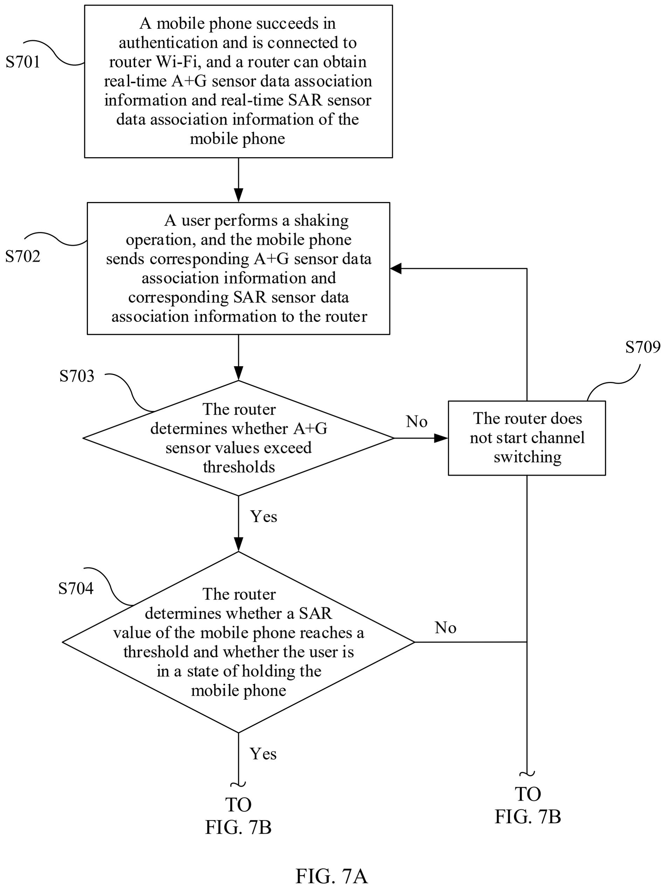

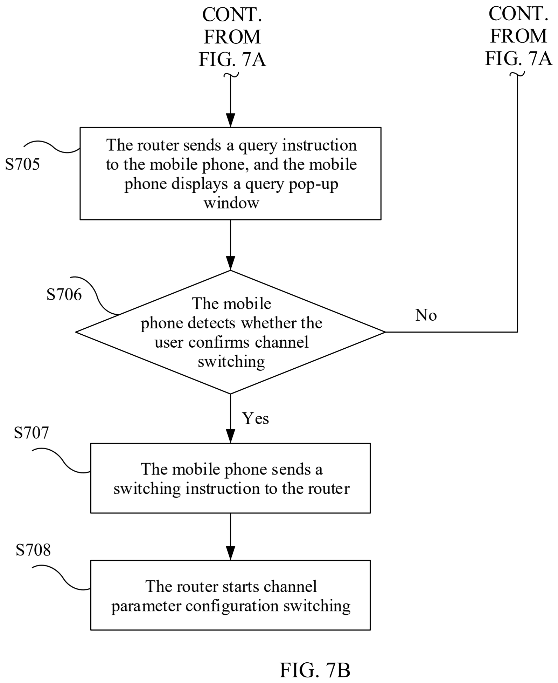

A process in which a user performs channel switching based on a shaking operation is described in detail by using an example in which a terminal device is a mobile phone and a routing device is a wireless router. FIG. 7A and FIG. 7B are a specific schematic flowchart of channel switching performed by the user based on a shaking operation according to an embodiment of this application. Specifically, the method includes the following steps.

S701: The mobile phone succeeds in authentication and is connected to router Wi-Fi, and the router can obtain real-time A+G sensor data association information and real-time SAR sensor data association information of the mobile phone.

It may be understood that, in this embodiment of this application, the mobile phone succeeds in identity authentication performed by using an authentication mechanism, for example, a key, and may perform wireless access by using the wireless router, that is, may be connected to Wi-Fi. The wireless router records related information of the mobile phone, and may also obtain the A+G sensor (that is, an A and a G sensor) data association information and the SAR sensor data association information of the mobile phone in real time. A scenario in which the wireless router obtains the sensor data association information of the mobile phone is described above. Details are not described herein again.

The A sensor is acceleration data of motions in three axis directions, the G sensor is angular velocity data of the motions in the three axis directions, and the A+G sensors may be used to determine motion track information of the mobile phone. For example, when the mobile phone 20 is horizontally placed and does not move, the acceleration data of three axes is 0 m/s², and the angular velocity data of the three axes is 0 rad/s. If the mobile phone 20 performs a conventional operation, for example, video watching, game playing, or web page browsing, the acceleration data and the angular velocity data of the three axis directions fluctuate within small ranges (for example, 0 m/s² to 10 m/s² and 0 rad/s to 5 rad/s). If the mobile phone 20 is greatly shaken, both the acceleration data and the angular velocity data of the three axis directions exceed a specific range and have a large data amplitude change. For example, an acceleration in any direction of the three axis directions exceeds 20 m/s², and angular velocity data in any direction of the three axis directions exceeds 10 rad/s.

SAR is radio frequency power radiated by a human body when the human body is close to a handheld radio transmission device. A SAR sensor may determine a distance between the human body and the mobile phone by monitoring a capacitance, and may be used to determine a contact status between the user and the mobile phone.

It may be understood that, in this embodiment of this application, when the user shakes the mobile phone, the A+G sensor data association information of the mobile phone is obviously different from values obtained when the user normally operates the mobile phone. The wireless router may determine an operation status of the mobile phone by obtaining the A+G sensor data association information of the mobile phone in real time. Whether the user holds the mobile phone is determined by using the SAR sensor data association information, to avoid a misoperation and the like caused by shaking caused by falling of the mobile phone.

In some embodiments, when detecting sensor data association information corresponding to a preset operation, the mobile phone may alternatively send the sensor data association information to the wireless router. For example, when it is detected that the user shakes the mobile phone, the A+G sensor data association information of the mobile phone is sent to the wireless router. In this way, resource consumption caused by a need of the wireless router to obtain the sensor data association information in real time can be reduced.

S702: The user performs a shaking operation, and the mobile phone sends corresponding A+G sensor data association information and corresponding SAR sensor data association information to the router.

In some embodiments, when the user experiences an Internet lag and wants to improve a Wi-Fi signal, the user may perform a shaking operation. The shaking operation may be an operation that the user holds the mobile phone to shake the mobile phone a preset quantity of times, for example, twice or three times.

In some embodiments, when detecting that a current network status is poor and the user performs a shaking operation, the mobile phone sends corresponding A+G sensor data association information and corresponding SAR sensor data association information to the wireless router device.

It may be understood that, in some embodiments, the mobile phone may send the A+G sensor data association information and the SAR sensor data association information to the wireless router in real time.

S703: The router determines whether A+G sensor values exceed thresholds, and if the A+G sensor values exceed the thresholds, proceed to S704; or if the A+G sensor values do not exceed the thresholds, proceed to S709.

It may be understood that, in this embodiment of this application, the wireless router may monitor and obtain the A+G sensor data association information of the mobile phone in real time, and determine the values. The A+G sensor thresholds that indicate that channel switching can be performed need to be preset for the wireless router. If the A+G sensor values obtained by the wireless router, for example, acceleration values of the three axes and angular velocity values of the three axes, respectively exceed (that is, greater than or equal to, or greater than) corresponding thresholds, or at least some values exceed corresponding thresholds, it indicates that the mobile phone is greatly shaken at this time. In this case, proceed to S704: Determine the SAR sensor data association information. If the A+G sensor values obtained by the wireless router, for example, acceleration values of the three axes and angular velocity values of the three axes, neither exceed (that is, less than, or less than or equal to) corresponding thresholds, it indicates that a motion status of the mobile phone is stable, and there is no shaking operation, that is, no channel switching intention. In this case, proceed to S709: Do not start a signal switching state.

S704: The router determines whether a SAR sensor value of the mobile phone reaches a threshold and whether the user is in a state of holding the mobile phone, and if the SAR sensor value of the mobile phone reaches the threshold and the user is in a state of holding the mobile phone, proceed to S705; or if the SAR sensor value of the mobile phone does not reach the threshold and the user is not in a state of holding the mobile phone, proceed to S709.

It may be understood that, in this embodiment of this application, the wireless router may monitor and obtain the SAR sensor data association information of the mobile phone in real time, and determine the data association information. The SAR sensor threshold that indicates that channel switching can be performed needs to be preset for the wireless router. If the SAR sensor value obtained by the wireless router exceeds the threshold, it indicates that the user holds the mobile phone at this time, and the operation of shaking the mobile phone is a "shaking" operation performed by the user. In this case, proceed to S705: Send, to the mobile phone, a query instruction instructing whether to switch a channel. If the SAR sensor value obtained by the wireless router does not reach the threshold, it indicates that the user is far away and does not operate the mobile phone, shaking of the mobile phone is caused by another factor, for example, falling of the mobile phone, and it indicates that the user does not have a channel switching intention. In this case, proceed to S709: Do not start a signal switching state.

S705: The router sends the query instruction to the mobile phone, and the mobile phone displays a query pop-up window.

In some embodiments, the wireless router sends the query instruction to the mobile phone to query a user intention. After receiving the query instruction, the mobile phone may display the query pop-up window to query a user intention. For example, a form of the query pop-up window may be shown in FIG. 4B, and includes the pop-up window interface 401, the selection control 402, and the selection control 403. In some embodiments, the mobile phone may alternatively query a user intention in any other form, for example, in a form of sending a voice instruction.

S706: The mobile phone detects whether the user confirms channel switching, and if the user confirms channel switching, proceed to S707; or if the user does not confirm channel switching, proceed to S709.

In some embodiments, the user may tap a corresponding control in the query pop-up window to choose whether to switch a channel. For example, the user may tap a "yes" control to choose to switch a channel, or may tap a "no" control to choose not to perform channel switching. As shown in FIG. 4B, when detecting that the user taps the "yes" control 402, the mobile phone 20 may detect that the user confirms channel switching. In this case, proceed to S707: Send a switching instruction to the wireless router. If the mobile phone detects that the user selects the "no" control 403, proceed to S709: Do not perform signal switching.

S707: The mobile phone sends the switching instruction to the router.

In some embodiments, when detecting that the user selects the "yes" control in the query pop-up window, that is, detecting that the user confirms a channel switching intention, the mobile phone sends the switching instruction to the wireless router.

S708: The router starts channel parameter configuration switching.

It may be understood that, in this embodiment of this application, if the user chooses to perform channel configuration switching, the wireless router starts channel parameter configuration switching, to automatically set an optimal operating channel. For example, an operating frequency band of the Wi-Fi signal is 2.4 GHz and 5 GHz. The 2.4 GHz frequency band is divided into 13 overlapped and misaligned 22 MHz channels, with channel code from 1 to 13, and there is an overlapping range between adjacent channels. The 5 GHz frequency band has a large quantity of channels. In addition, adjacent channels do not overlap. The wireless router automatically detects an available radio frequency channel and selects a channel that is less occupied and less interfered. A manner of automatic channel switching of the wireless router is not limited in this embodiment of this application.

S709: The router does not start channel switching.

It may be understood that, in this embodiment of this application, if the sensor data association information does not conform to data association information corresponding to a preset shaking operation, or the user does not intend to improve the Wi-Fi signal, the wireless router does not start channel switching. In this case, proceed to S702. The wireless router continues to monitor and obtain the A+G sensor data association information and the SAR sensor data association information of the mobile phone in real time.

In this way, by using the foregoing procedure, the user may implement channel switching of the wireless router by simply "shaking" the mobile phone twice or three times, thereby enhancing the Wi-Fi signal and improving user experience.

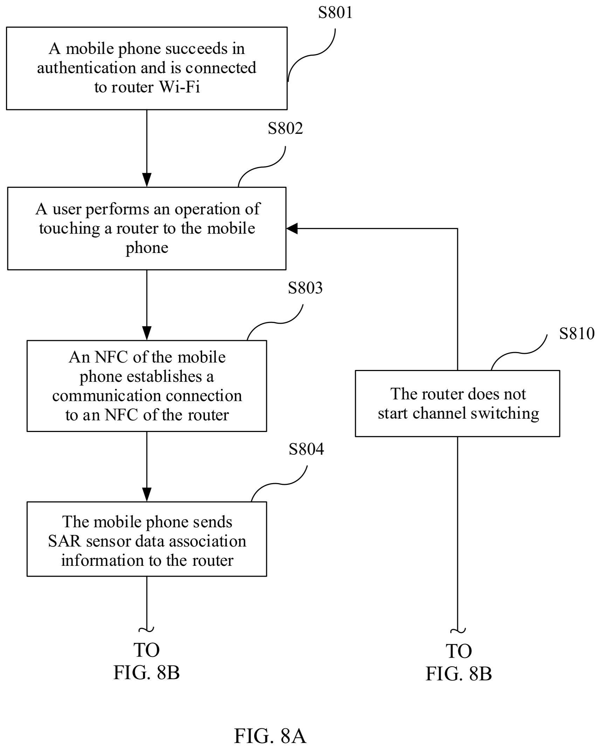

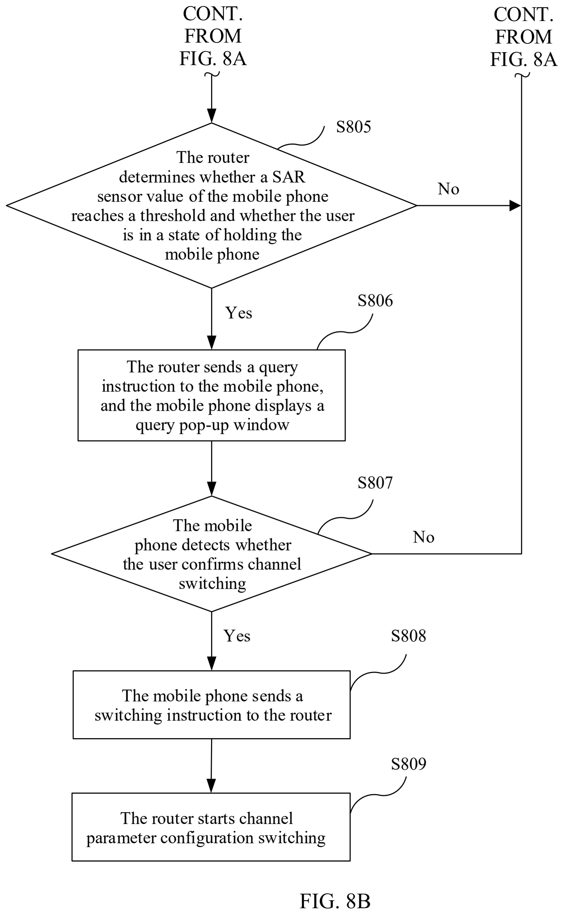

A process in which another user performs channel switching based on a touch operation provided in embodiments of this application is described in detail by still using an example in which a terminal device is a mobile phone and a routing device is a wireless router. FIG. 8A and FIG. 8B are a specific schematic flowchart of channel switching performed by the user based on a touch operation according to an embodiment of this application. Specifically, the method includes the following steps.

S801: The mobile phone succeeds in authentication and is connected to router Wi-Fi.

It may be understood that, in this embodiment of this application, the mobile phone succeeds in identity authentication performed by using an authentication mechanism, for example, a key, and may perform wireless access by using the wireless router, that is, may be connected to Wi-Fi for Internet access.

S802: The user performs an operation of touching the router to the mobile phone.

In some embodiments, when the user experiences an Internet lag and wants to improve a Wi-Fi signal, the user may perform an operation of touching the mobile phone to the wireless router.

S803: An NFC of the mobile phone establishes a communication connection to an NFC of the router.

It may be understood that NFC is a near field communication technology. After the mobile phone touches the wireless router, NFCs at two ends of the devices trigger a connection. Within a distance of 10 cm, the two devices may perform non-contact point-to-point data transmission. During point-to-point data transmission, an active communication mode is used between the two devices. That is, when the mobile phone or the wireless router needs to send data, a data sender generates a radio frequency field of the data sender, and a receiver disables a radio frequency field and receives data from the sender in a listening mode; after sending the data, the sender disables the radio frequency field of the sender and enters a listening mode to wait for the target receiver to send data; and when sending the data, the receiver needs to generate a radio frequency field of the receiver to send the data.

In some embodiments, after the user performs an operation of touching the wireless router to the mobile phone, a wireless communication connection between the mobile phone and the NFC is triggered.

In some embodiments, the mobile phone and the wireless router may alternatively establish another near field connection, for example, ultra-wideband (Ultra-Wideband, UWB) or another wireless carrier communication technology.

S804: The mobile phone sends SAR sensor data association information to the router.

In some embodiments, after the wireless router establishes an NFC communication connection to the mobile phone, the mobile phone sends real-time SAR sensor data association information to the wireless router device.

S805: The router determines whether a SAR sensor value of the mobile phone reaches a threshold and whether the user is in a state of holding the mobile phone, and if the SAR sensor value of the mobile phone reaches the threshold and the user is in a state of holding the mobile phone, proceed to S806; or if the SAR sensor value of the mobile phone does not reach the threshold and the user is not in a state of holding the mobile phone, proceed to S810.

It may be understood that, in this embodiment of this application, the wireless router may monitor and obtain the SAR sensor data association information of the mobile phone in real time, and determine the value. The SAR sensor threshold that indicates that channel switching can be performed needs to be preset for the wireless router. If the SAR sensor value obtained by the wireless router exceeds the threshold, it indicates that the user holds the mobile phone at this time. In this case, proceed to S806: Send, to the mobile phone, a query instruction instructing whether to switch a channel. If the SAR sensor value obtained by the wireless router does not reach the threshold, it indicates that the user does not have a channel switching intention. In this case, proceed to S810: Do not start a signal switching state.

S806: The router sends the query instruction to the mobile phone, and the mobile phone displays a query pop-up window.

In some embodiments, the wireless router sends the query instruction to the mobile phone to query a user intention. After receiving the query instruction, the mobile phone may display the query pop-up window to query a user intention. For example, a form of the query pop-up window may be shown in FIG. 5B, and includes the pop-up window interface 501, the selection control 502, and the selection control 503. In some embodiments, the mobile phone may alternatively query a user intention in any other form, for example, in a form of sending a voice instruction.

In some embodiments, if the SAR sensor value obtained by the wireless router reaches the threshold and it is determined that the user has a channel switching intention, channel switching may alternatively be directly performed without a query.

S807: The mobile phone detects whether the user confirms channel switching, and if the user confirms channel switching, proceed to S808; or if the user does not confirm channel switching, proceed to S810.

In some embodiments, the user may tap a corresponding control in the query pop-up window to choose whether to switch a channel. For example, the user may tap a "yes" control to choose to switch a channel, or may tap a "no" control to choose not to perform channel switching. As shown in FIG. 5B, when detecting that the user taps the "yes" control 502, the mobile phone 20 may detect that the user confirms channel switching. In this case, proceed to S808: Send a switching instruction to the wireless router. If the mobile phone detects that the user selects the "no" control 803, proceed to S810: Do not perform signal switching.

S808: The mobile phone sends the switching instruction to the router.

It may be understood that this step is similar to step S707. Details are not described herein again.

S809: The router starts channel parameter configuration switching.

It may be understood that this step is similar to step S808. Details are not described herein again.

S810: The router does not start channel switching.

It may be understood that, in this embodiment of this application, if the sensor data association information does not meet the preset SAR sensor threshold, or the user does not intend to improve the Wi-Fi signal, the wireless router does not start signal switching.

In this way, by using the foregoing procedure, the user may implement channel switching of the wireless router by simply touching the wireless router to the mobile phone, thereby enhancing the Wi-Fi signal and improving user experience.

Optionally, embodiments of this application further provide a process in which a user performs channel switching based on a shaking operation. Differently, a mobile phone does not send A+G sensor data association information and SAR sensor data association information in real time after being connected to Wi-Fi, but sends the A+G sensor data association information and the SAR sensor data association information to a wireless router only when detecting a preset shaking operation and determining, based on current running scenario information, that shaking is not a function operation of a current application. The following describes a channel switching procedure in detail.

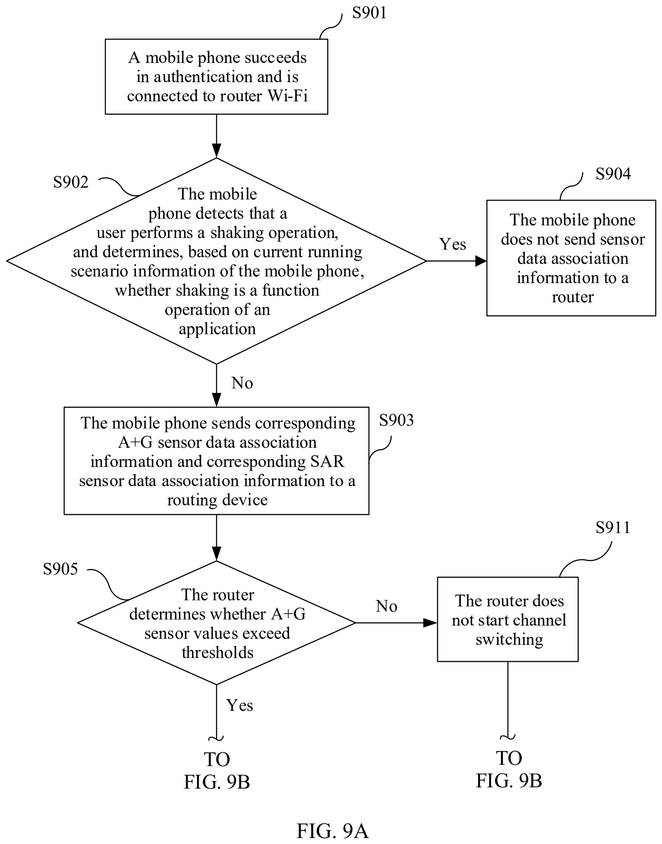

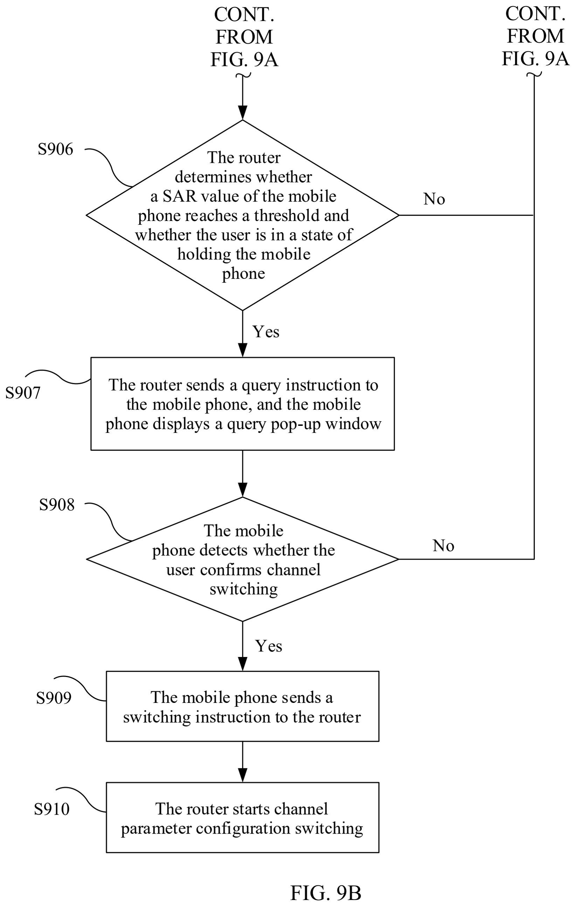

As shown in FIG. 9A and FIG. 9B, the method includes the following steps.

S901: A mobile phone succeeds in authentication and is connected to router Wi-Fi.

It may be understood that, in this embodiment of this application, the mobile phone succeeds in identity authentication performed by using an authentication mechanism, for example, a key, and may perform wireless access by using a wireless router, that is, may be connected to Wi-Fi for Internet access.

S902: The mobile phone detects that a user performs a shaking operation, and determines, based on current running scenario information of the mobile phone, whether shaking is a function operation of an application, and if shaking is not the function operation of the application, proceed to S903; or if shaking is the function operation of the application, proceed to S904.

It may be understood that in some applications, a shaking operation may implement some specific functions, for example, a red envelope grabbing function of WeChat^{™}. After detecting a shaking operation of the user, the mobile phone may determine, based on the current running scenario information, whether shaking is a specific function operation of a currently run application. If a purpose of the operation is to execute a specific function of the currently running program, proceed to S904: Sensor data association information is not sent to the wireless router. If a determining result is no, that is, it is determined that an intention of the operation performed by the user is to switch a channel, proceed to S903: The mobile phone sends sensor data association information to the wireless router.

For example, when it is determined, based on the current running scenario information, that a red envelope grabbing function of a run application A exists in a current running scenario and an implementation operation of the function is a shaking operation, that is, it is determined that an intention of the operation performed by the user is not to switch a channel, the sensor data association information is not sent to the wireless router, thereby avoiding misjudgment of a user intention.

S903: The mobile phone sends corresponding A+G sensor data association information and corresponding SAR sensor data association information to the router.

In some embodiments, if the mobile phone detects a shaking operation and a purpose of the operation is not to execute a specific function of a currently run program, the mobile phone sends corresponding A+G sensor data association information and corresponding SAR sensor data association information to the wireless router.

In some embodiments, when detecting that a network status is poor and determining that shaking is not a function operation of an application, the mobile phone may alternatively send the A+G sensor data association information and the SAR sensor data association information to the wireless router.

S904: The mobile phone does not send the sensor data association information to the router.

It may be understood that, if the mobile phone determines that a purpose of shaking is to execute a specific function of a currently run program, the mobile phone does not send the sensor data association information to the wireless router.

S905: The router determines whether A+G sensor values exceed thresholds, and if the A+G sensor values exceed the thresholds, proceed to S906; or if the A+G sensor values do not exceed the thresholds, proceed to S911.

S906: The router determines whether a SAR sensor value of the mobile phone reaches a threshold and whether the user is in a state of holding the mobile phone, and if the SAR sensor value of the mobile phone reaches the threshold and the user is in a state of holding the mobile phone, proceed to S907; or if the SAR sensor value of the mobile phone does not reach the threshold and the user is not in a state of holding the mobile phone, proceed to S911.

S907: The router sends a query instruction to the mobile phone, and the mobile phone displays a query pop-up window.

S908: The mobile phone detects whether the user confirms channel switching, and if the user confirms channel switching, proceed to S909; or if the user does not confirm channel switching, proceed to S911.

S909: The mobile phone sends a switching instruction to the router.

S910: The router starts channel parameter configuration switching.

S911: The router does not start channel switching.

It may be understood that steps S905 to S911 are similar to steps S703 to S709. Details are not described herein again.

Optionally, embodiments of this application further provide a process in which a user performs channel switching based on a shaking operation. Differently, a mobile phone does not send A+G sensor data association information and SAR sensor data association information in real time after being connected to Wi-Fi, but sends the A+G sensor data association information and the SAR sensor data association information to a wireless router only when detecting a preset shaking operation, and the mobile phone sends scenario information data to the wireless router while sending the sensor data association information. The following describes a procedure in detail.

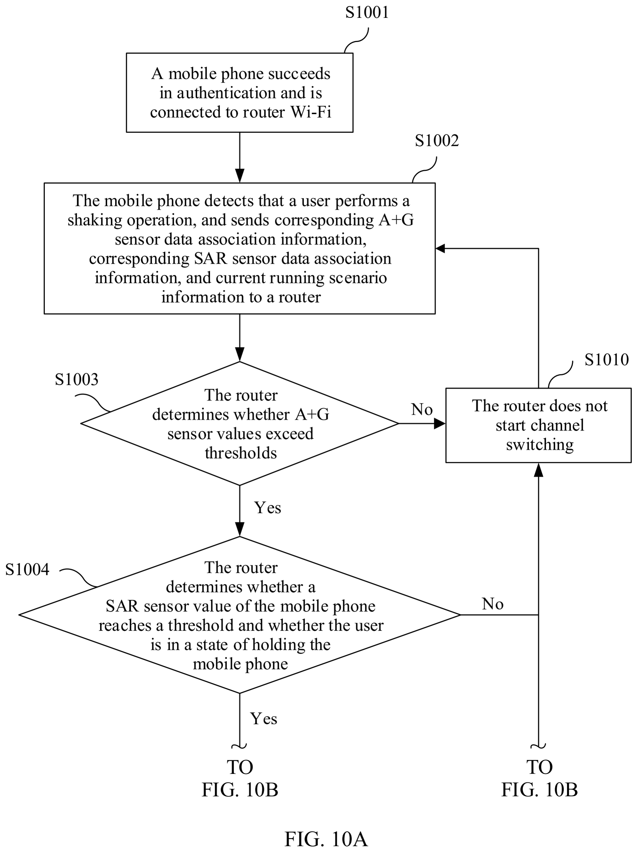

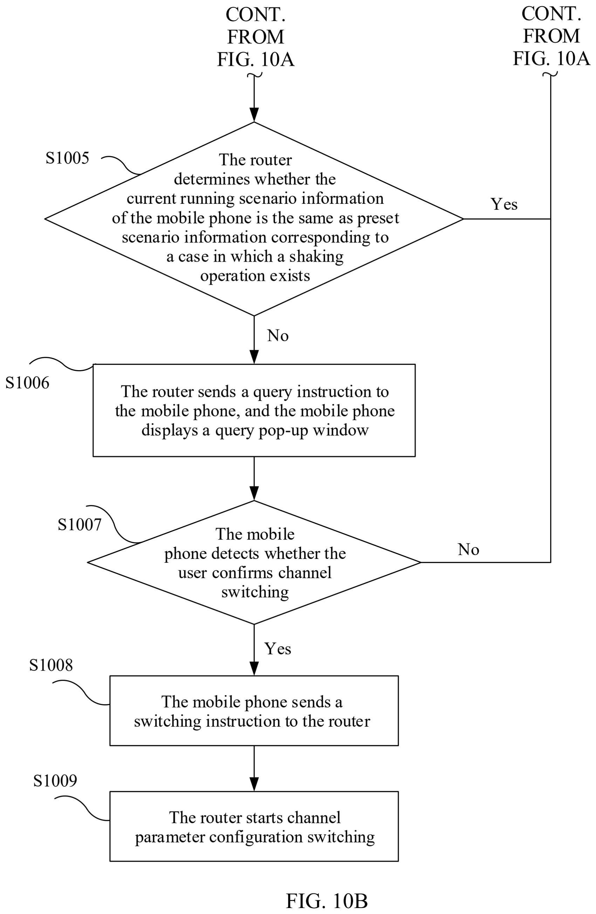

FIG. 10A and FIG. 10B are another specific schematic flowchart of channel switching performed by a user based on a shaking operation according to an embodiment of this application. Specifically, the method includes the following steps.

S1001: A mobile phone succeeds in authentication and is connected to router Wi-Fi.

It may be understood that this step is similar to step S901. Details are not described herein again.

S1002: The mobile phone detects that the user performs a shaking operation, and sends corresponding A+G sensor data association information, corresponding SAR sensor data association information, and current running scenario information to a router.

In some embodiments, when the user experiences an Internet lag and wants to improve a Wi-Fi signal, the user may perform a shaking operation. The shaking operation may be an operation that the user holds the mobile phone to shake the mobile phone a preset quantity of times, for example, twice or three times.

In some embodiments, only when the mobile phone detects that a current network status is poor, and determines, based on the A+G sensor data association information and the SAR sensor data association information, that the user performs a shaking operation, the mobile phone sends the corresponding A+G sensor data association information, the corresponding SAR sensor data association information, and the current running scenario information to the wireless router device.

S1003: The router determines whether A+G sensor values exceed thresholds, and if the A+G sensor values exceed the thresholds, proceed to S1004; or if the A+G sensor values do not exceed the thresholds, proceed to S1010.

It may be understood that this step is similar to step S703. Details are not described herein again.

S1004: The router determines whether a SAR sensor value of the mobile phone reaches a threshold and whether the user is in a state of holding the mobile phone, and if the SAR sensor value of the mobile phone reaches the threshold and the user is in a state of holding the mobile phone, proceed to S1005; or if the SAR sensor value of the mobile phone does not reach the threshold and the user is not in a state of holding the mobile phone, proceed to S1010.

It may be understood that this step is similar to step S704. Details are not described herein again.

S1005: The router determines whether the current running scenario information of the mobile phone is the same as preset scenario information corresponding to a case in which a shaking operation exists, and if the current running scenario information of the mobile phone is not the same as the preset scenario information corresponding to the case in which the shaking operation exists, proceed to S 1006; or if the current running scenario information of the mobile phone is the same as the preset scenario information corresponding to the case in which the shaking operation exists, proceed to S1010.

It may be understood that a plurality of types of existing scenario information in which a switching operation exists but channel switching is not performed may be preset in the wireless router. For example, pre-stored scenario information corresponding to a case in which a shaking operation exists includes scenario information of a red envelope grabbing function, scenario information of a friend adding function, or the like.

In some embodiments, the wireless router determines the received running scenario information. If the received running scenario information is the same as the scenario information that corresponds to the case in which the shaking operation exists and that is preset for the wireless router, for example, a red envelope grabbing function of WeChat^{™}, it indicates that an intention of the user to shake the mobile phone is not to switch a channel. In this case, proceed to S 1010: Do not perform a channel switching function. If the received running scenario information is not the same as the scenario information, it indicates that an intention of a current shaking operation of the user is to switch a channel. In this case, proceed to S1006: Send, to the mobile phone, a query instruction instructing whether to switch a channel.

S1006: The router sends the query instruction to the mobile phone, and the mobile phone displays a query pop-up window.

S1007: The mobile phone detects whether the user confirms channel switching, and if the user confirms channel switching, proceed to S1008; or if the user does not confirm channel switching, proceed to S1010.

S 1008: The mobile phone sends a switching instruction to the router.

S 1009: The router starts channel parameter configuration switching.

S1010: The router does not start channel switching.

It may be understood that steps S1006 to S1010 are similar to steps S705 to S709. Details are not described herein again.

In this way, by using the foregoing procedure, a user intention can be accurately identified, and the user may implement channel switching of the wireless router by simply "shaking" the mobile phone twice or three times, thereby enhancing the Wi-Fi signal and improving user experience.

It may be understood that the foregoing embodiment provided in this application is merely an example for description based on a scenario of a shaking operation. After performing a touch operation, the mobile phone may alternatively send current running scenario information to the wireless router, and the wireless router determines, based on sensor data association information and the current running scenario information that are sent by the mobile phone, whether to perform a channel switching operation. For example, existing scenario information in which a switching operation exists but channel switching is not performed may be preset in the wireless router. For example, pre-stored scenario information corresponding to a case in which a touch operation exists but channel switching is not performed includes tap-to-touch connection scenario information and the like. After the wireless router is connected to an NFC of the mobile phone in a touch mode, if the wireless router determines that the current running scenario information of the mobile phone is the tap-to-touch connection scenario information of the mobile phone, the wireless router does not perform a channel switching function. In this way, a user intention can be accurately identified.

In addition, the foregoing shaking operation and the foregoing touch operation are all examples for description. In embodiments of this application, another preset operation may be set, for example, an operation of switching a channel by using a voice instruction. For example, when the user watches a video, a video pause occurs due to signal freezing. The user may control the mobile phone by using a voice instruction, for example, "change the channel of the wireless router". The mobile phone may send corresponding sound sensor data association information to the wireless router, so that the wireless router determines, based on the sound sensor data association information, whether to switch a channel.

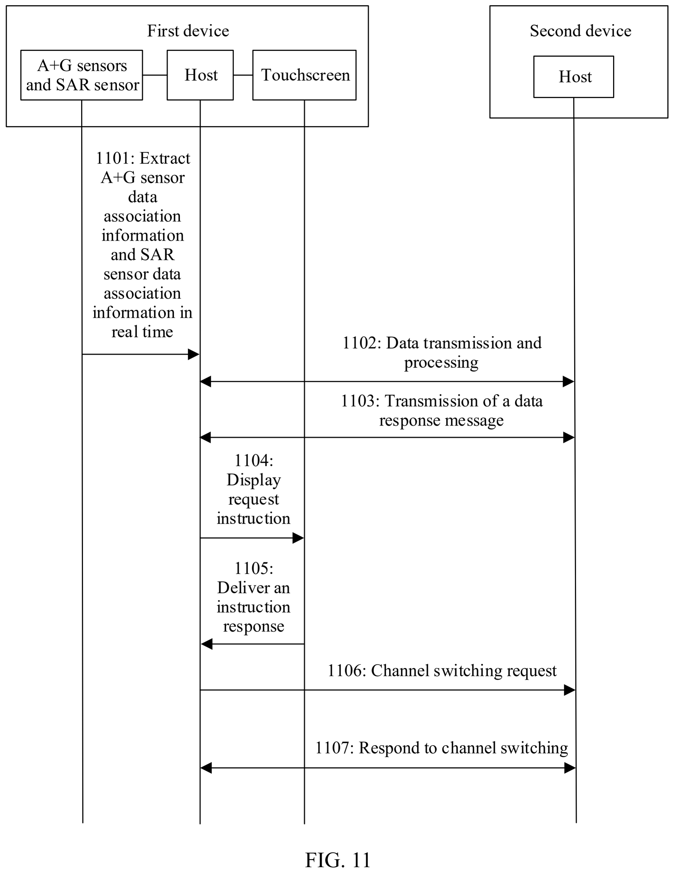

Interaction between devices in a scenario in which a user performs channel switching based on a shaking operation is described below by using an example in which a first device is a terminal device and a second device is a routing device. The first device includes A+G sensors, a SAR sensor, a host, and a touchscreen, and the second device includes a host. FIG. 11 is a schematic flowchart of interaction according to an embodiment of this application. Specifically, the method shown in FIG. 11 includes the following steps.

1101: The host of the first device extracts A+G sensor data association information and SAR sensor data association information of the first device in real time.

It may be understood that the first device internally provides support for a device sensor, and a driver program for managing sensor hardware, and may listen, in a listener manner, to an external environment change sensed by the sensor hardware. In this embodiment of this application, whether a shaking operation exists on the first device is determined through monitoring and using the A+G sensor data association information and the SAR sensor data association information.

1102: Data transmission and processing are performed between the hosts of the first device and the second device.

It may be understood that, after the first device is connected to a Wi-Fi signal provided by the second device, the two devices continuously send signals to the outside, and is kept in a state of being able to receive a signal at any time, that is, data transmission may be performed between the hosts of the two devices. Data transmission is performed in a form of encapsulating into a data frame. After receiving the data frame, the host of the device needs to perform frame splitting and integration processing. In this embodiment of this application, after the user performs a shaking operation, the host of the first device transmits current network status information, the A+G sensor data association information, and the SAR sensor data association information to the host of the second device, and the host of the second device may process and determine the received data association information.

1103: Transmission of a data response message is performed between the hosts of the first device and the second device.

It may be understood that, after successfully receiving a signal, a data receiver may send reception acknowledgment information to the other device. In this embodiment of this application, after detecting that the user has a channel switching intension, the second device may send a query instruction to the host of the first device, to notify the user of re-confirming whether to switch a channel.

1104: The host of the first device sends a display request instruction to the touchscreen, so that the touchscreen displays the request instruction sent by the host.

It may be understood that, when the host of the first device receives a notification sent by the host of the second device, the host of the first device displays a pop-up window notification on the touchscreen. For example, as shown in FIG. 4B, a screen of the mobile phone 20 displays the pop-up window interface 401, to ask the user whether the Wi-Fi signal needs to be improved.

1105: The touchscreen of the first device delivers an instruction response to the host.

It may be understood that, in this embodiment of this application, the touchscreen may include components such as a screen and a touch sensor. When the user operates a mobile phone by using the screen, an operation instruction of the user is converted into an electrical signal and the electrical signal is sent to the host by using the touch sensor. As shown in FIG. 4B, if the user selects the "yes" control 402, an instruction instructing the wireless router to select channel switching is delivered to a host of the mobile phone.

1106: The host of the first device sends a channel switching request to the host of the second device.

It may be understood that when detecting that the user chooses, by using the touchscreen, to improve the Wi-Fi signal, and determining that the user has a channel switching intention, the host of the first device sends an instruction to the host of the second device to request the second device to switch a channel.

1107: The hosts of the first device and the second device respond to channel switching.

It may be understood that, after receiving the channel switching instruction of the host of the first device, the host of the second device performs channel switching.

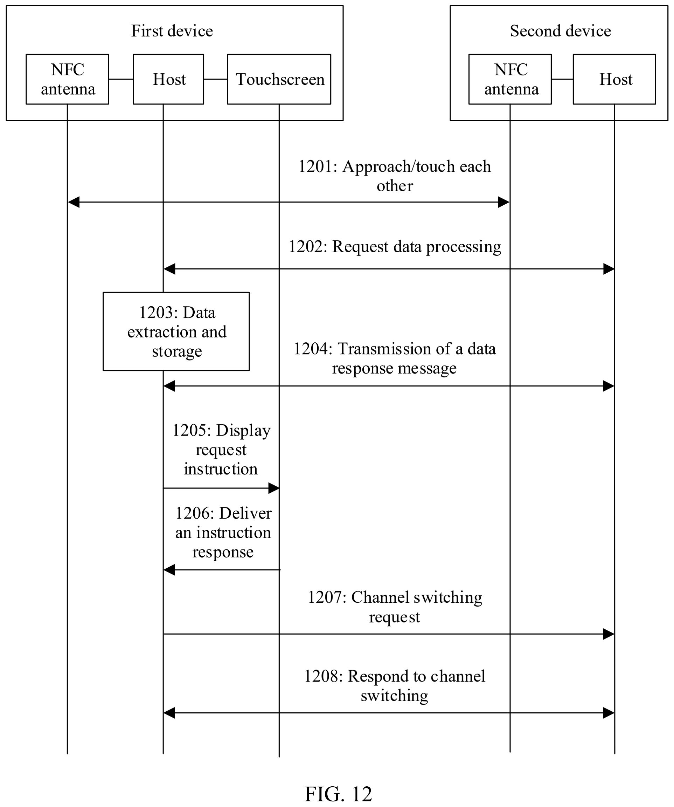

Interaction between devices in a scenario in which a user performs channel switching based on a touch operation is described below by using an example in which a first device is a terminal device and a second device is a routing device. The first device includes an NFC antenna, a host, and a touchscreen, and the second device includes an NFC antenna and a host. FIG. 12 is a schematic flowchart of interaction according to an embodiment of this application. Steps 1204 to 1208 are the same as steps 1103 to 1107 in FIG. 11. Details are not described herein again. Specifically, the method shown in FIG. 12 includes the following steps.

1201: The NFC antennas of the first device and the second device approach/touch each other.

It may be understood that NFC is a non-contact radio frequency identification and interconnection technology. When the NFC antennas of the first device and the second device approach/touch each other, an NFC connection is triggered, and non-contact point-to-point data transmission may be performed.

1202: The host of the first device and the host of the second device request data processing.

It may be understood that, after the NFC connection is established, data transmission may be performed between the two devices within a distance of 10 cm. In this embodiment of this application, after the user performs a touch operation, the host of the first device transmits current network status information and SAR sensor data association information to the host of the second device, and the host of the second device may process and determine the received data association information.

1203: The host of the first device performs data extraction and storage.

The host of the first device may obtain the SAR sensor data association information and send the data association information to the second device.

1204: Transmission of a data response message is performed between the hosts of the first device and the second device.

It may be understood that, after successfully receiving a signal, a data receiver may send reception acknowledgment information to the other device. In this embodiment of this application, after detecting that the user has a channel switching intention, the second device may send a query instruction to the host of the first device, to notify the user of re-confirming whether to switch a channel.

1205: The host of the first device sends a display request instruction to the touchscreen, so that the touchscreen displays the request instruction sent by the host.

It may be understood that, when the host of the first device receives a notification sent by the host of the second device, the host of the first device displays a pop-up window notification on the touchscreen. For example, as shown in FIG. 5B, a screen of the mobile phone 20 displays the pop-up window interface 501, to ask the user whether a Wi-Fi signal needs to be improved.

1206: The touchscreen of the first device delivers an instruction response to the host.

It may be understood that, in this embodiment of this application, the touchscreen may include components such as a screen and a touch sensor. When the user operates a mobile phone by using the screen, an operation instruction of the user is converted into an electrical signal and the electrical signal is sent to the host by using the touch sensor. As shown in FIG. 5B, if the user selects the "yes" control 502, an instruction instructing the wireless router to select channel switching is delivered to a host of the mobile phone.

1207: The host of the first device sends a channel switching request to the host of the second device.

It may be understood that when detecting that the user chooses, by using the touchscreen, to improve the Wi-Fi signal, and determining that the user has a channel switching intention, the host of the first device sends an instruction to the host of the second device to request the second device to switch a channel.

1208: The hosts of the first device and the second device respond to channel switching.

It may be understood that, after receiving the channel switching request of the host of the first device, the host of the second device performs channel switching.

According to the foregoing interaction procedure, a current channel can be automatically switched to another channel through an operation of touching the wireless router to the mobile phone, thereby effectively simplifying a channel switching procedure, enhancing the Wi-Fi signal, and improving user experience.

Embodiments disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code may be used for inputting instructions, to perform the functions described in this application and generate output information. The output information may be applied to one or more output devices in a known manner. For a purpose of this application, a processing system includes any system with a processor, for example, a digital signal processor, a microcontroller, an application-specific integrated circuit, or a microprocessor.

The program code may be implemented in a high-level programming language or an object-oriented programming language to communicate with the processing system. The program code may alternatively be implemented in an assembly language or a machine language when required. Actually, the mechanism described in this application is not limited to a scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions carried by or stored on one or more temporary or non-temporary machine-readable (for example, computer-readable) storage media, and the instructions may be read and executed by one or more processors. For example, the instructions may be distributed through a network or another computer-readable medium. Therefore, the machine-readable medium may include any mechanism for storing or transmitting information in a machine (for example, a computer)-readable form, including but not limited to a floppy disk, a compact disc, an optical disc, a magnetic optical disk, a read-only memory (Read-Only Memory, ROM), a random access memory (Random Access Memory, RAM), a magnetic card, an optical card, an erasable programmable read-only memory (Erasable Programmable Read-Only Memory, EPROM), a flash memory, an electrically erasable programmable read-only memory (Electrically Erasable Programmable Read-Only Memory, EEPROM), or a tangible machine-readable memory for transmitting information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting an electronic instruction or information in a machine (for example, a computer)-readable form.

In the accompanying drawings, some structural or method features may be shown in a particular arrangement and/or order. However, it should be understood that such a particular arrangement and/or order may not be needed. In some embodiments, these features may be arranged in a manner and/or order different from that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in the device embodiments of this application are logic units/modules. Physically, one logic unit/module may be one physical unit/module, or may be a part of one physical unit/module, or may be implemented by a combination of a plurality of physical units/modules. Physical implementations of these logic units/modules are not the most important, and a combination of functions implemented by these logic units/modules is a key to resolving technical problems proposed in this application. In addition, to highlight an innovative part of this application, a unit/module that is not closely related to resolving the technical problems proposed in this application is not introduced in the foregoing device embodiments of this application. This does not mean that there are no other units/modules in the foregoing device embodiments.

It should be noted that, in examples and the specification of this patent, relational terms such as first and second are merely used to distinguish one entity or operation from another entity or operation, and do not necessarily require or imply that any actual relationship or order exists between these entities or operations. Moreover, the terms "include", "contain", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device that includes the element.

Although this application has been illustrated and described with reference to some preferred embodiments of this application, a person of ordinary skill in the art should understand that various changes may be made to this application in form and detail without departing from the scope of this application.

## Claims

1. A communication method, comprising:
communicating, by a first electronic device, with a second electronic device over a first channel, wherein the second electronic device is a network access device;
detecting, by the first electronic device, a first trigger event, and sending sensor data association information to the second electronic device; and
in response to the second electronic device determining that the sensor data association information meets a first preset condition, switching, by the second electronic device, from the first channel for communicating with the first electronic device to a second channel.

2. The method according to claim 1, wherein detecting, by the first electronic device, the first trigger event, and sending the sensor data association information to the second electronic device comprises:
when detecting the first trigger event and determining that running scenario information of the first electronic device meets a second preset condition, sending, by the first electronic device, the sensor data association information to the second electronic device.

3. The method according to claim 1, wherein the method further comprises:
detecting, by the first electronic device, the first trigger event, and sending the sensor data association information and running scenario information corresponding to the first electronic device to the second electronic device; and
in response to the second electronic device determining that the sensor data association information meets the first preset condition and the running scenario information meets a second preset condition, switching, by the second electronic device, from the first channel for communicating with the first electronic device to the second channel.

4. The method according to claim 2 or 3, wherein the first trigger event is a preset operation, and the sensor data association information comprises sensor data association information corresponding to the preset operation.

5. The method according to claim 4, wherein the running scenario information comprises information about an application that is running on the first electronic device.

6. The method according to claim 1, wherein the method further comprises:
detecting, by the first electronic device, the first trigger event, and sending network status information to the second electronic device; and
in response to the second electronic device determining that the sensor data association information meets the first preset condition and the network status information meets a third preset condition, switching, by the second electronic device, from the first channel for communicating with the first electronic device to the second channel.

7. The method according to claim 1, wherein detecting, by the first electronic device, the first trigger event, and sending the sensor data association information to the second electronic device comprises:
when detecting the first trigger event and determining that network status information of the first electronic device meets a third preset condition, sending, by the first electronic device, the sensor data association information to the second electronic device.

8. The method according to claim 1, wherein detecting, by the first electronic device, the first trigger event, and sending the sensor data association information to the second electronic device comprises:
when detecting the first trigger event and determining that running scenario information of the first electronic device meets a second preset condition and network status information of the first electronic device meets a third preset condition, sending, by the first electronic device, the sensor data association information to the second electronic device.

9. The method according to claim 1, wherein the method further comprises:
detecting, by the first electronic device, the first trigger event, and sending the sensor data association information, network status information, and running scenario information to the second electronic device; and
in response to the second electronic device determining that the sensor data association information meets the first preset condition, the running scenario information corresponding to the first electronic device meets a second preset condition, and the network status information meets a third preset condition, switching, by the second electronic device, from the first channel for communicating with the first electronic device to the second channel.

10. The method according to any one of claims 7 to 9, wherein the network status information comprises a network rate.

11. The method according to claim 1, wherein detecting, by the first electronic device, the first trigger event, and sending the sensor data association information to the second electronic device comprises:
when approaching or being in contact with the second electronic device, sending, by the first electronic device, the sensor data association information to the second electronic device.

12. The method according to claim 11, wherein that the first electronic device approaches or is in contact with the second electronic device comprises: establishing, by the first electronic device, a near field communication connection to the second electronic device.

13. The method according to any one of claims 1 to 10, wherein the first trigger event comprises an operation of shaking the first electronic device, and the sensor data association information comprises at least one of accelerometer data association information, gyroscope sensor data association information, and specific absorption rate sensor data association information.

14. The method according to claim 1, wherein the first trigger event comprises a preset-gesture screen-touching operation, and the sensor data association information comprises pressure sensor data association information.

15. The method according to claim 1, wherein before switching, by the second electronic device, from the first channel for communicating with the first electronic device to the second channel, the method further comprises:
sending, by the first electronic device, query information to a user; and
in response to a confirmation instruction of the user, switching, by the second electronic device, from the first channel for communicating with the first electronic device to the second channel.

16. The method according to claim 15, wherein sending, by the first electronic device, the query information to the user comprises: displaying, by the first electronic device, the query information and/or sending, by the first electronic device, a voice instruction corresponding to the query information.

17. A communication method, applied to a second electronic device, wherein the method comprises:
communicating, by the second electronic device, with a first electronic device over a first channel, wherein the second electronic device is a network access device;
receiving, by the second electronic device, sensor data association information sent by the first electronic device; and
determining, by the second electronic device, that the sensor data association information meets a first preset condition, and switching, by the second electronic device, from the first channel for communicating with the first electronic device to a second channel.

18. The method according to claim 17, wherein the method further comprises:
receiving, by the second electronic device, the sensor data association information and running scenario information corresponding to the first electronic device that are sent by the first electronic device; and
determining, by the second electronic device, that the sensor data association information meets the first preset condition and the running scenario information meets a second preset condition, and switching, by the second electronic device, from the first channel for communicating with the first electronic device to the second channel.

19. The method according to claim 18, wherein the running scenario information comprises information about an application that is running on the first electronic device.

20. The method according to claim 17, wherein the method further comprises:
receiving, by the second electronic device, the sensor data association information and network status information that are sent by the first electronic device; and
determining, by the second electronic device, that the sensor data association information meets the first preset condition and the network status information meets a third preset condition, and switching, by the second electronic device, from the first channel for communicating with the first electronic device to the second channel.

21. The method according to claim 17, wherein the method further comprises:
receiving, by the second electronic device, the sensor data association information, and running scenario information and network status information that correspond to the first electronic device that are sent by the first electronic device; and
determining, by the second electronic device, that the sensor data association information meets the first preset condition, the running scenario information meets a second preset condition, and the network status information meets a third preset condition, and switching, by the second electronic device, from the first channel for communicating with the first electronic device to the second channel.

22. The method according to claim 20 or 21, wherein the network status information comprises a network rate.

23. The method according to claim 17, wherein before switching, by the second electronic device, from the first channel for communicating with the first electronic device to the second channel, the method further comprises:
sending, by the second electronic device, a query instruction to the first electronic device; and
in response to a confirmation instruction executed by a user on the first electronic device, switching, by the second electronic device, from the first channel for communicating with the first electronic device to the second channel.

24. An electronic device, comprising a memory and a processor, wherein the memory is configured to store instructions executed by one or more processors of the electronic device, and the processor is one of the one or more processors of the electronic device and is configured to perform the communication method according to any one of claims 1 to 23.

25. A readable medium, wherein the readable medium stores instructions, and when the instructions are executed on an electronic device, the electronic device is enabled to perform the communication method according to any one of claims 1 to 23.
